# EUROPEAN PATENT APPLICATION

(11) **EP 4 848 853 A1**
(43) Date of publication of application: **02.12.2026**
(21) Application number: 24919395.4
(22) Date of filing: 26.01.2024
(51) Int. Cl.: H04W 72/0446

(54) **METHODS AND APPARATUSES FOR SENDING SIGNAL AND RECEIVING SIGNAL, AND COMMUNICATION SYSTEM**

(71) Applicant: 1FINITY INC., Kawasaki-shi, Kanagawa 211-8588 (JP)
(72) Inventor: JIANG, Qinyan, Beijing 100022 (CN); ZHANG, Jian, Beijing 100022 (CN); ZHANG, Lei, Beijing 100022 (CN); WANG, Xin, Beijing 100022 (CN)
(74) Representative: Haseltine Lake Kempner LLP
(86) International application number: PCT/CN2024/074335
(87) International publication number: WO 2025/156297

(57) **Abstract**

Embodiments of this disclosure provide a signal transmission method and a signal reception method and apparatuses thereof. The signal reception method includes: receiving first indication information and/or second indication information for indicating a frequency domain location of a first sub-band by a terminal equipment, the first indication information and/or second indication information indicating the frequency domain location of the first sub-band based on at least one subcarrier spacing (SCS) and/or at least one reference point; and transmitting an uplink signal on a resource of the first sub-band or a second sub-band at a downlink time domain location.

## Description

### Technical Field

This disclosure relates to the field of communication technologies.

### Background

In legacy time division duplexing (TDD), time domain resources are divided into downlink and uplink. At the same time point, only downlink transmission or uplink transmission can be performed. Therefore, allocating limited or fewer uplink time periods will result in reduced coverage and capacity, as well as increased latency. To address this issue, a method may be proposed to enable a network device to support simultaneous existence/occurrence/performing of both downlink and uplink, that is, supporting the network device to transmit and receive signals simultaneously.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

As an SI (study item) of Rel-18, application scenarios, simulation methods and potential standardization impacts of sub-band non-overlapping full duplex (SBFD) have been preliminarily studied in Rel-18. In the upcoming Rel-19, SBFD will be officially standardized as a work item (WI). For SBFD, a network device may operate in a full duplex mode (simultaneous reception and transmission). As a result, the capacity and coverage of uplink transmission may be improved, and latency of uplink transmission may be reduced.

In order to improve flexibility of resource allocation and resource utilization, division of a sub-band may be flexible. That is, a network device may indicate a downlink sub-band and an uplink sub-band at the same time location to a terminal equipment. However, there is currently no specific method for indicating a frequency domain location of the above sub-band.

In order to solve at least one of the above problems, embodiments of this disclosure provide a signal transmission method, a signal reception method and apparatuses thereof and a communication system.

According to one aspect of the embodiments of this disclosure, there is provided a signal transmission apparatus, applicable to a terminal equipment, including:
a receiver configured to receive first indication information and/or second indication information for indicating a frequency domain location of a first sub-band, the first indication information and/or second indication information indicating the frequency domain location of the first sub-band based on at least one subcarrier spacing (SCS) and/or at least one reference point; and
a transmitter configured to transmit an uplink signal on a resource of the first sub-band or a second sub-band in a downlink time domain location.

According to another aspect of the embodiments of this disclosure, there is provided a signal reception apparatus, applicable to a network device, including:
a transmitter configured to transmit first indication information and/or second indication information for indicating a frequency domain location of a first sub-band, the first indication information and/or second indication information indicating the frequency domain location of the first sub-band based on at least one subcarrier spacing (SCS) and/or at least one reference point; and
a receiver configured to receive an uplink signal on a resource of the first sub-band or a second sub-band in a downlink time domain location.

According to a further aspect of the embodiments of this disclosure, there is provided a communication system, including a terminal equipment and/or a network device,
the terminal equipment including the apparatus as described in the one aspect,
and the network device including the apparatus as described in the other aspect.

An advantage of the embodiments of this disclosure exists in that:
performing SBFD operations by the network device is supported, and at the same time, indicating the frequency domain locations of the sub-bands by the network device to the terminal equipment is also supported, so as to improve flexibility of resource allocation and resource utilization.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/including/include" when used in this specification is taken to specify the presence of stated features, integers, steps or components but does not preclude the presence or addition of one or more other features, integers, steps, components or groups thereof.

### Brief Description

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of a communication system of embodiments of this disclosure;
FIGs. 2A and 2B are schematic diagrams of carrier configuration of embodiments of this disclosure;
FIG. 3 is a schematic diagram of a signal transmission method of embodiments of this disclosure;
FIG. 4 is a schematic diagram of a signal transmission apparatus of embodiments of this disclosure;
FIG. 5 is a schematic diagram of a signal reception method of embodiments of this disclosure;
FIG. 6 is a schematic diagram of a signal reception apparatus of embodiments of this disclosure;
FIG. 7 is a schematic diagram of a network device of embodiments of this disclosure;
FIG. 8 is a schematic diagram of a terminal equipment of embodiments of this disclosure; and
FIGs. 9A-14D are schematic diagrams of a first sub-band and/or a second sub-band of embodiments of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any level, which may, for example, include but not limited to the following communication protocols: 1G (generation), 2G, 2.5G, 2.75G, 3G, 4G, 4.5G, 5G, New Radio (NR), and 6G etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, which may also be referred to as "a terminal equipment (TE)". The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, a machine to machine (M2M) terminal, and a terminal supporting sidelink communication, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. In this text, "a device" may refer to a network device, and may also refer to a terminal equipment, except specified otherwise.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, uplink signals may include uplink data signals and/or uplink control signals and/or PRACHs and/or SRSs, etc., and may also be referred to as uplink transmissions (UL transmissions) or uplink information or uplink channels. Transmitting/receiving uplink transmission on an uplink resource may be understood as transmitting/receiving the uplink transmission by using the uplink resource. Downlink signals may include downlink data signals and/or downlink control signals and/or synchronization signals (SSs, such as PSSs/SSSs) and/or broadcast channels (PBCHs) and/or SSBs (SS/PBCH blocks, including PSSs, SSSs, PBCHs and their DMRSs) and/or CSI-RSs, etc., and may also be referred to as downlink transmissions (DL transmissions) or downlink information or downlink channels. Transmitting/receiving downlink transmissions on downlink resources may be understood as transmitting/receiving the downlink transmissions by using the downlink resources.

In the embodiments of this disclosure, higher layer signaling may be, for example, radio resource control (RRC) signaling; for example, it is referred to an RRC message, which includes broadcast/common RRC message/signaling (for example, an MIB, system information), and a dedicated RRC message; or, it is referred to an as an RRC information element (RRC IE), or information fields included in an RRC message or RRC information elements(or information fields included in information fields). Higher layer signaling may also be, for example, media access control (MAC) signaling, or an MAC control element (MAC CE); however, this disclosure is not limited thereto. Names of signaling (such as an RRC message, an information element (IE), an information field, and a higher layer parameter, etc.) used in the embodiments of this disclosure are examples only, and may also be other names, and the embodiments of this disclosure are not limited thereto.

In the embodiments of this disclosure, multiple means at least two, or two or more than two.

In the embodiments of this disclosure, "predefined" means defined in a protocol or determined according to a rule defined in a protocol, without needing additional configuration. Configuration/indication refer(s) to configuring/indicating directly or indirectly by a network device via higher layer signaling and/or physical layer signaling. Configuration/indication may be performed by introducing higher layer parameters into higher layer signaling. The higher layer parameters refer to information fields and/or information elements (IEs)/information elements in the higher layer signaling. The physical layer signaling refers to, for example, control information (DCI) carried by a physical downlink control channel or control information carried by a sequence; however, it is not limited thereto.

For ease of description, following description shall be given by taking that a base station serves as an access network device as an example. In the following description, without causing confusion, "if...", "in a case where..." and "when..." may be used interchangeably. For resources in the frequency domain, "carrier" and "resource grid" may be interchangeable, and "subcarrier spacing configuration *µ* " and "subcarrier spacing (SCS) Δ*f* " may be interchangeable. 'Subcarrier spacing' and 'numerology' may be interchangeable. "Resource Block", "RB" and "PRB", "physical resource block" and "common resource block (CRB)" may be interchangeable. Configuration/indication/providing/given may be interchangeable. "Index" and "identifier (ID) may be interchangeable.

Scenarios in the embodiments of this disclosure shall be described below by way of examples; however, this disclosure is not limited thereto.

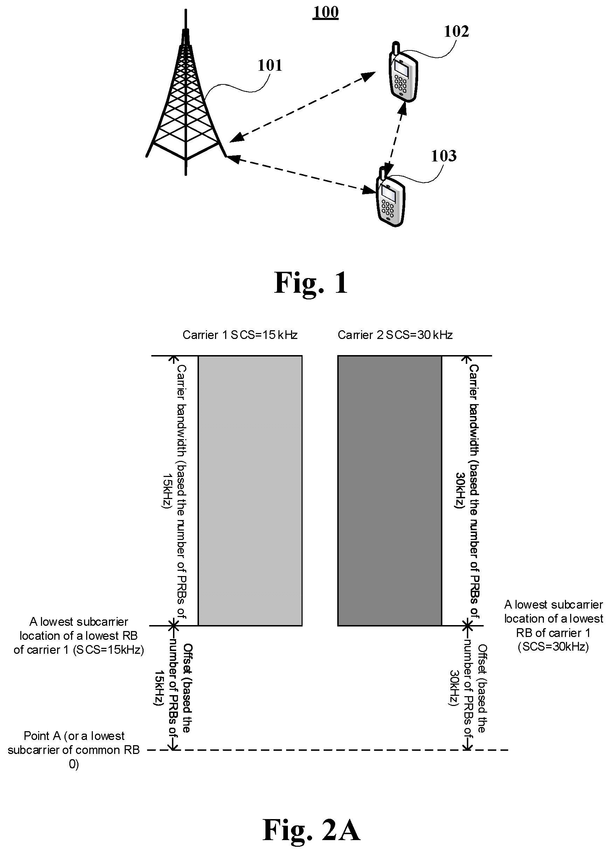

FIG. 1 is a schematic diagram of a communication system of embodiments of this disclosure, in which a case where terminal equipments and a network device are taken as examples is schematically shown. As shown in FIG. 1, the communication system 100 may include a network device 101 and terminal equipments 102, 103. For the sake of simplicity, an example having only two terminal equipments and one network device is schematically given in FIG. 1; however, the embodiments of this disclosure are not limited thereto.

In the embodiments of this disclosure, existing services or services that may be implemented in the future may be performed between the network device 101 and the terminal equipments 102, 103. For example, such services may include but not limited to an enhanced mobile broadband (eMBB), massive machine type communication (mMTC), and ultra-reliable and low-latency communication (URLLC), etc.

The terminal equipment 102 may transmit data to the network device 101, such as in a granted or grant-free manner. The network device 101 may receive data transmitted by one or more terminal equipments 102 and feed back information to the terminal equipment 102, such as acknowledgement (ACK)/non-acknowledgement (NACK) information. According to the feedback information, the terminal equipment 102 may acknowledge end of a transmission process, or may perform new data transmission, or may perform data retransmission.

The network device 101 may transmit data to the terminal equipment 102 and/or the terminal equipment 103 in a unicast or groupcast or broadcast manner. The terminal equipment 102 may receive data transmitted by one or more network devices (such as dual-connectivity or multi-connectivity) via a downlink or the terminal equipment 103 via a sidelink.

It should be noted that FIG. 1 shows that two terminal equipments 102, 103 are both in coverage of the network device 101. However, this disclosure is not limited thereto, and the two terminal equipments 102, 103 may not be in coverage of the network device 101, or one terminal equipment 102 is in coverage of the network device 101 and the other terminal equipment 103 is out of coverage of the network device 101.

Terms involved in this disclosure shall be explained below; however, following explanations do not constitute limitations on the embodiments of this disclosure.

### --Subcarrier spacing

A frequency location of a subcarrier refers to, for example, a center frequency of the subcarrier. A subcarrier spacing refers to, for example, a spacing between frequency domain locations of two neighbor subcarriers.

The subcarrier spacing in the frequency domain is configurable, and candidate subcarrier spacings are shown in Table 1 below. Wherein, when the subcarrier spacing is 60 kHz, an extended or normal cyclic prefix (CP) may be applied, and other subcarrier spacings may be used as normal CPs. However, it is not limited thereto, other SCSs may also be supported, and extended CPs or normal CPs may be used respectively. For different frequency ranges or frequency bands or carriers, available subcarrier spacings may be defined separately.

A minimum/lowest SCS refers to, for example, an SCS with a corresponding SCS configuration *µ* and/or SCS size Δ*f* having a minimum value, and a maximum/highest SCS refers to, for example, an SCS with a corresponding SCS configuration *µ* and/or SCS size Δ*f* having a maximum value.

**Table 1**

| *µ* | Δ*f* =2*^{µ}*·15 [kHz ] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |
| 5 | 480 | Normal |
| 6 | 960 | Normal |

### --Slot

The number of OFDM symbols per slot, the number of slots per frame and the number of slots per subframe vary according to subcarrier spacings or cyclic prefixes, as shown in Table 2 (for normal cyclic prefixes) and Table 3 (for extended cyclic prefixes) below:

**Table 2**

| ***µ*** | ${N}_{symb}^{slot}$ **(number of OFDM symbols per slot)** | ${N}_{slot}^{frame , μ}$ **(number of slots per frame)** | ${N}_{slot}^{subframe , μ}$ **(number of slots per subframe)** |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

**Table 3**

| ***µ*** | ${N}_{symb}^{slot}$ **(number of OFDM symbols per slot)** | ${N}_{slot}^{frame , μ}$ **(number of slots per frame)** | ${N}_{slot}^{subframe , μ}$ **(number of slots per subframe)** |
|---|---|---|---|
| 2 | 12 | 40 | 4 |

### --Point A

As a common reference point of RB grids (for different SCS configurations *µ* or of SCSs), point A may be taken as a common reference point in the frequency domain for configuring other resources. For each SCS, a frequency location of Point A is a frequency location of SC 0 (or in other word, a first/lowest (frequency location) subcarrier) of CRB 0 (or in other word, a first/lowest (frequency location) CRB).

Point A is obtained in following modes (by a terminal equipment in following modes):
Mode 1: indicating/configuring by a higher layer parameter offsetToPointA. For example, (for a downlink of a Pcell (for (an initial access procedure/when the terminal equipment is not in an RRC connected state (RRC_CONNECTED)/when the terminal equipment is in an RRC idle state (RRC_IDLE)), it may also be in other situations; however, it is not limited thereto), it is indicated/configured by the higher layer parameter offsetToPointA (in FrequencyInfoDL-SIB in DownlinkConfigCommonSIB) in SIB1, as shown below:

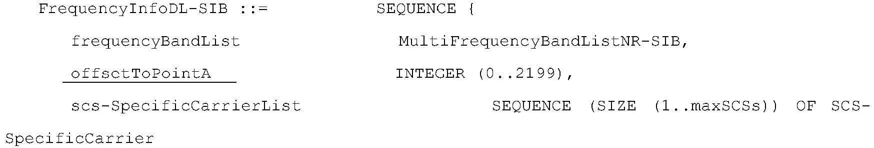

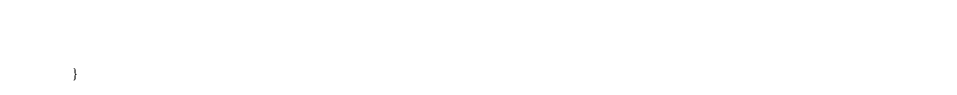

Where, OffsetToPointA represents/indicates/configures a direct frequency offset between Point A and a first/lowest (frequency location) subcarrier of a first/lowest (frequency location) RB overlapping with an SSB (selected to be used by the terminal equipment for an initial cell), and is denoted in units of RBs. For frequency range FR1, it is assumed that a subcarrier spacing is 15 kHz, and for frequency range FR2, it is assumed that a subcarrier spacing is 60 kHz (i.e. for FR1, it is assumed that it is denoted in units of RBs with a subcarrier spacing of 15 kHz, and for FR2, it is assumed that it is denoted in units of RBs with a subcarrier spacing of 60 kHz).

For example, if the operating frequency band of the cell is FR1 and offsetToPointA=2, the frequency offset between Point A and the above subcarrier includes 2 RBs using a subcarrier spacing of 15 kHz, expressed as 2*15*12=360 kHz in units of Hertz. According to the frequency location of the above subcarrier and the frequency offset, the terminal equipment may determine/obtain the frequency location of Point A.

In some cases (such as for operation without shared spectrum channel access in FR1 and FR2-1), the SCS of the above lowest RB is indicated by subCarrierSpacingCommon (in an MIB); or, in some cases (such as for operation with shared spectrum channel access in FR1 or FR2), the SCS of the above lowest RB is identical to the above synchronization signal block (SSB) (for example, needing no additional indication).

Mode 2: indicating/configuring the frequency location of Point A by a higher layer parameter absoluteFequencyPointA, denoted by AFRCN. For example, an uplink of a Pcell (in an initial access procedure/when the terminal equipment is not in an RRC connected state (RRC_CONNECTED)/when the terminal equipment is in an RRC idle state (RRC_IDLE) is indicated/configured by the higher layer parameter absoluteFrequencyPointA (in FrequencyInfoUL-SIB in UplinkConfigCommonSIB) in SIB1, as shown below:

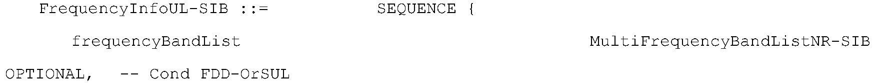

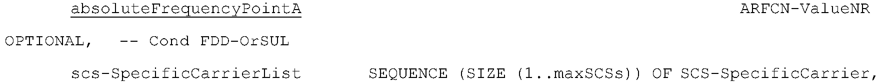

For another example, Point A for a downlink is indicated/configured by the higher layer parameter absoluteFrequencyPointA (in FrequencyInfoDL in DownlinkConfigCommon) in ServingCellConfigCommon, and Point A for an uplink is indicated/configured by the higher layer parameter absoluteFrequencyPointA (in FrequencyInfoUL in UplinkConfigCommon) in ServingCellConfigCommon, as shown below:

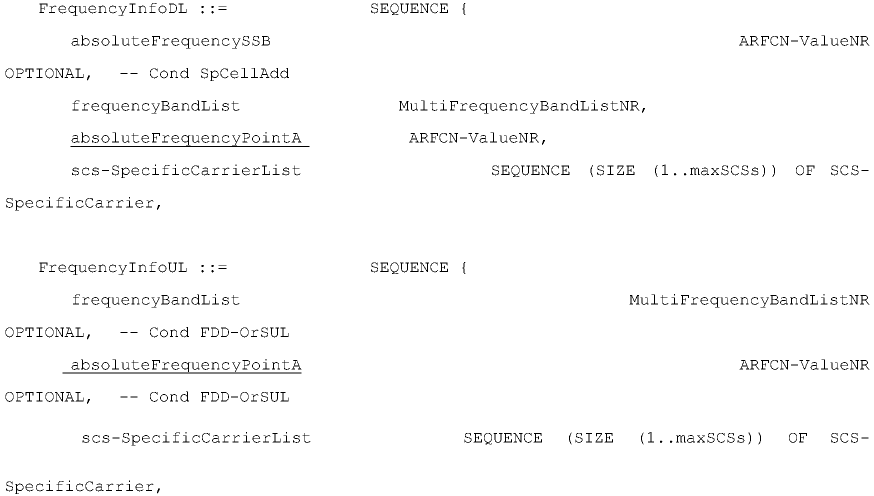

Wherein, Point A for a downlink of TDD and Point A for an uplink of TDD are identical. When a cell adopts TDD or its working frequency band is a TDD frequency band, for the uplink, there is no need to use the above higher layer parameter specific for the uplink to configure Point A, but the above higher layer parameter specific for the downlink may be directly used/reused. For example, for TDD, Point A indicated in FrequencyInfoDL-SIB and FrequencyInfoDL is applicable to both downlink and uplink, and FrequencyInfoUL-SIB and FrequencyInfoUL do not include absoluteFrequencyPointA.

### --Common resource blocks (CRBs)

For SCS configuration *µ*, CRBs are numbered upwards starting from 0 in the frequency domain. A center of subcarrier 0 (a lowest subcarrier in an RB) of CRB 0 (a lowest CRB) coincides with point A, that is, point A denotes a starting (location) of CRB 0 or a frequency location of subcarrier 0. (In some cases, the starting (location) of CRB 0 (a lowest CRB) or subcarrier 0 (a lowest subcarrier in an RB) and Point A may be interchangeable). The CRBs may be used to locate locations of other resources.

### --Resource grid

For each numerology (corresponding to an SCS and a CP) and carrier, the resource grid includes ${N}_{grid , x}^{size , μ} {N}_{sc}^{RB}$ carriers and ${N}_{symb}^{subframe , μ}$ OFDM symbols, starting from a CRB ${N}_{grid , x}^{start , μ}$ (in the frequency domain); where, x denotes the downlink DL or the uplink UL or the sidelink SL, that is, it denotes whether the resource grid is for the DL or the UL or the SL, numerology is as shown in Table 1 above, *µ* denotes a subcarrier spacing configuration, corresponding subcarrier spacing is Δ*f* = *2^{µ}* · 15 *[kHz],* and a corresponding CP includes a normal CP and an extended CP.

Specifically, in the time domain, the resource grid includes ${N}_{symb}^{subframe , μ}$ symbols, ${N}_{symb}^{subframe , μ}$ denotes the number of symbols for *µ* in each subframe, and ${N}_{symb}^{subframe , μ} = {N}_{symb}^{slot} {N}_{slot}^{subframe , μ}$ , as shown in Tables 1, 2 and 3. The number of symbols included in a slot is dependent on the cyclic prefix CP (normal CP, extended CP), hence, ${N}_{symb}^{subframe , μ}$ is also dependent on the cyclic prefix. In other words, values of ${N}_{symb}^{subframe , μ}$ for different numerologies (i.e. different SCSs and/or cyclic prefixes CPs) are different. In the frequency domain, the resource grid includes ${N}_{grid , x}^{size , μ} {N}_{sc}^{RB}$ subcarriers starting from CRB ${N}_{grid , x}^{start , μ}$; where, ${N}_{grid , x}^{start , μ}$ denotes a start of the resource grid (in the frequency domain), ${N}_{grid , x}^{size , μ}$ denotes a size of the resource grid or a carrier bandwidth for the SCS configuration *µ* ( ${N}_{grid , x}^{size , μ}$ refers to the number of RBs using SCS *µ*), and ${N}_{sc}^{RB}$ denotes the number of subcarriers included in each RB. For example, an RB includes continuous ${N}_{sc}^{RB} = 12$ subcarriers in the frequency domain (for example, the subcarriers are numbered 0-11 from low to high in frequency domain locations).

### --Regarding SCS-specific carrier configuration

In a cell, downlink and uplink may possibly support/configure one or more subcarrier spacings (SCSs, Δ*f* ) respectively. When multiple SCSs are supported/configured, starting locations and carrier bandwidths are respectively configured for the subcarrier spacings (SCSs, Δ*f*), so as to configure corresponding SCS-specific carriers. For example, for the downlink and uplink, a group of carriers are configured separately for the above one or more subcarriers via scs-SpecificCarrierList, wherein different SCSs correspond respectively to an SCS-specific carrier. For example, as shown in an ASN. 1 example configured for Point A, scs-SpecificCarrierList may include one or more SCS-SpecificCarrier IEs, wherein one IE configures an SCS-specific carrier for an SCS, scs-SpecificCarrierList in FrequencyInfoDL-SIB and FrequencyInfoDL is configured for the downlink, and scs-SpecificCarrierList in FrequencyInfoUL-SIB and FrequencyInfoUL is configured for the uplink. The SCS-specific carrier configured for the downlink may also be referred to as DL SCS-specific carrier, and the SCS-specific carrier configured for the uplink may also be referred to as UL SCS-specific carrier. For the downlink, the network device performs such configuration, for example, for DL BWPs, by using all the SCSs. For the uplink, the network device performs such configuration, for example, for UL BWPs by using all the SCSs. That is, if an SCS is adopted by a DL BWP, for the downlink, an SCS-specific carrier shall be configured for the SCS; and if an SCS is adopted by a UL BWP, for the uplink, an SCS-specific carrier shall be configured for the SCS.

For example, higher layer parameters included in an SCS-SpecificCarrier information element (IE) are as follows:

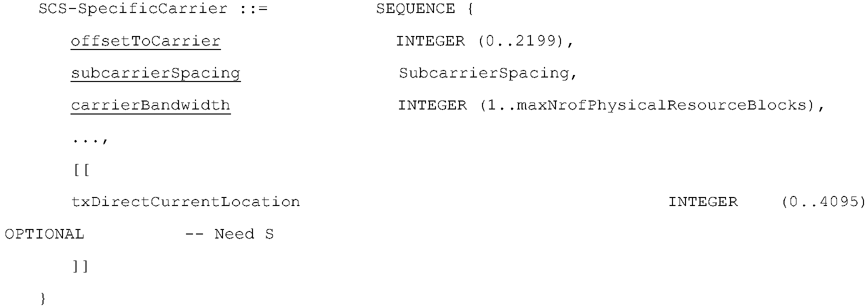

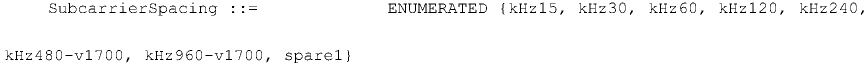

The higher layer parameter subcarrierSpacing indicates the SCS configuration *µ*or SCS of the carrier. For the SCS configuration *µ* or SCS, offsetToCarrier indicates the starting location of the carrier, and carrierBandwidth indicates the carrier bandwidth, wherein offsetToCarrier is the offset (in the frequency domain) between Point A (or in other word, subcarrier 0 of CRB 0) and the first/lowest (available) subcarrier in the carrier (i.e. SC 0 of ${N}_{grid , x}^{start , μ}$), represented by the number of RBs (PRBs) (using the SCS configuration *µ* or using the above subcarrierSpacing). Thus, the terminal equipment may determine/obtain the starting location of the carrier (i.e. (the frequency location of) the lowest (available) subcarrier in the carrier, i.e. SC 0 of ${N}_{grid , x}^{start , μ}$, or ${N}_{grid , x}^{start , μ}$) according to the frequency location of Point A and the offset. carrierBandwidth indicates the carrier bandwidth (width or size), denoted by the number of RBs (PRBs) (using the SCS configuration *µ* , or using the above subcarrierSpacing). For subcarrierSpacing, for example, for FR1, a configurable SCS value is 15 kHz or 30 kHz or 60 kHz, for FR2-1, a configurable SCS value is 60 kHz or 120 kHz, and for FR2-2, a configurable SCS value is 120 kHz, or 480 kHz, or 960 kHz; however, it is not limited thereto.

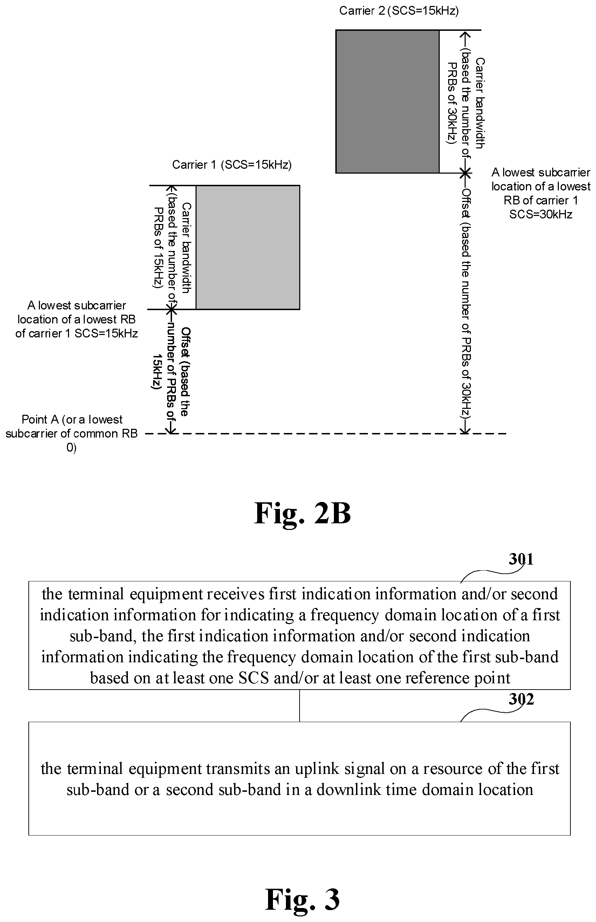

FIGs. 2A and 2B are schematic diagrams of the SCS-specific carrier configured in the embodiments of this disclosure. Assuming that two SCSs (e.g. 15kHz, 30 kHz) are supported/configured for downlink or uplink, as shown in FIGs. 2A and 2B, SCS-specific carriers 1 and 2 are configured for two SCSs respectively.

The above SCS-specific carrier configuration may be cell-specific or cell-common. That is, for a cell (from the perspective of the cell), there is only one unified configuration, and different configurations are not performed for different terminal equipments. However, it is not limited thereto, it may also be UE-specific or dedicated, that is, different configurations may be performed for different UEs, or there may be cell-specific configuration and UE-specific configuration, which shall not be illustrated herein one by one.

### --Regarding bandwidth part BWP

A BWP includes one or more consecutive (common) resource blocks, and an SCS of the BWP is configured by RRC signaling (subcarrierSpacing in a BWP IE). For example, the SCS of the BWP is identical to an SCS of an SCS-specific carrier to which it corresponds and the BWP is completely located within the SCS-specific carrier to which it corresponds. A DL BWP corresponds to a DL SCS-specific carrier, and a UL BWP corresponds to a UL SCS-specific carrier. Specifically, for example, for BWP i, the number ${N}_{BWP , i}^{start , μ}$ of resource blocks at a starting location ${N}_{BWP , i}^{size , μ}$ in the BWP needs to respectively satisfy ${N}_{grid , x}^{start , μ} \leq {N}_{BWP , i}^{start , μ} < {N}_{grid , x}^{start , μ} + {N}_{grid , x}^{size , μ}$ and ${N}_{grid , x}^{start , μ} < {N}_{BWP , i}^{start , μ} + {N}_{BWP , i}^{size , μ} \leq {N}_{grid , x}^{start , μ} + {N}_{grid , x}^{size , μ}$ .

Various implementations of the embodiments of this disclosure shall be described below with reference to the accompanying drawings. These implementations are illustrative only, and are not intended to limit this disclosure.

### Embodiments of a first aspect

The embodiments of this disclosure provide a signal reception method, which shall be described from a terminal equipment side.

FIG. 3 is a schematic diagram of the signal reception method of the embodiments of this disclosure. As shown in FIG. 3, the method includes:
301: the terminal equipment receives first indication information and/or second indication information for indicating a frequency domain location of a first sub-band, the first indication information and/or second indication information indicating the frequency domain location of the first sub-band based on at least one subcarrier spacing (SCS) and/or at least one reference point; and
302: the terminal equipment transmits an uplink signal on a resource of the first sub-band or a second sub-band in a downlink time domain location.

It should be noted that FIG. 3 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 3.

In some embodiments, the first sub-band and second sub-band, for example, are used to support SBFD operations (of a network device). From the perspective of the network device, the network device may receive (uplink) signals on the first sub-band or the second sub-band while transmitting (downlink) signals on other frequency domain resources in a period of time, thereby achieving a possibility of simultaneously transmitting and receiving signals (whether to receive and/or transmit is also dependent on other configurations and/or scheduling). From the perspective of the terminal equipment, it may transmit (uplink) signals on the first sub-band or the second sub-band or receive (downlink) signals on other frequency domain resources in a period of time (whether to transmit and/or receive is also dependent on other configurations and/or scheduling).

In some embodiments, (configuration(s) of) the first sub-band and/or the second sub-band is/are for the same cell or within a cell, or the above SBFD operations are for the same cell or within a cell. From the perspective of the network device, within the same cell, it may receive (uplink) signals on the first sub-band or the second sub-band in a period of time while transmitting (downlink) signals on other frequency domain resources. From the perspective of the terminal equipment, within this cell, it may transmit (uplink) signals on the first sub-band or the second sub-band or receive (downlink) signal on other frequency domain resources in this period of time.

In some embodiments, the above period of time includes the downlink time domain location.

In some embodiments, the downlink time domain location includes a predefined downlink time domain resource unit and/or a time domain resource unit indicated as downlink, and/or, the downlink time domain location is a full duplex (e.g. sub-band (non-overlapping) full duplex, SBFD) time domain resource unit, and/or, frequency domain resources to which the downlink time domain location corresponds include frequency domain resources for receiving downlink signals, wherein the frequency domain resources used for receiving downlink signals include a third sub-band; however, it is not limited thereto.

In some embodiments, the time domain resource unit includes a symbol and/or a slot and/or a sub-slot and/or a mini-slot and/or a symbol group and/or a slot group and/or a sub-frame and/or a frame and/or an ms and/or an s, etc.; however, it is not limited thereto. For example, the number of symbols included in the sub-slots and the mini-slot is less than or equal to the number of slots included in the slot, the symbol group includes one or more (continuous or non-continuous) symbols, and the slot group includes one or more (continuous or non-continuous) slots; however, it is not limited thereto.

In some embodiments, the time domain resource unit indicated as downlink includes a symbol and/or slot (explicitly or implicitly) indicated as downlink by first configuration information and/or second configuration information, wherein the first configuration information is cell-specific or common, and the second configuration information is UE-specific or dedicated. The first configuration information and/or the second configuration information is/are transmitted via higher layer signaling or carried by higher layer signaling or included in higher layer signaling. For example, the first configuration information is common TDD uplink and downlink configuration information TDD-UL-DL-ConfigCommon, and the second configuration information is dedicated TDD uplink and downlink configuration information TDD-UL-DL-ConfigDedicated. For another example, the first configuration information is used to configure a time domain location of a broadcast periodic downlink signal (such as an SSB, etc.), and the second configuration information is used to configure a time domain location of a UE-specific periodic downlink signal; however, it is not limited thereto.

In some embodiments, in 302, the uplink signal is transmitted on (all or a part of) frequency domain resources of the first sub-band or the second sub-band in the downlink time domain location, wherein all or part of the (frequency domain) resources used for transmitting the uplink signal are within or belong to the first sub-band or the second sub-band; however, it is not limited thereto.

In some embodiments, the first sub-band and second sub-band may include one or more continuous frequency domain resource units or multiple non-continuous frequency domain resource units, or the first sub-band and second sub-band may be composed of one or more continuous frequency domain resource units or multiple non-continuous frequency resource units, wherein the frequency domain resource unit includes one or more of a subcarrier, a subcarrier set/group, an RB, or an RB set/group, etc. The number of subcarriers included in a subcarrier group is or is not a multiple of the number of subcarriers included in an RB. For example, the number of subcarriers included in the subcarrier group is less than the number of subcarriers included in an RB; however, it is not limited thereto. The RB group includes multiple RBs, for example.

For example, if the frequency domain resource unit includes one of a subcarrier, a subcarrier set/group, an RB, or an RB group and the included one is an RB, the first sub-band includes one or more continuous RBs or multiple non-continuous RBs. For another example, if the frequency domain resource unit includes a subcarrier and an RB, the first sub-band may include an integer number of RBs and an integer number of subcarriers, and the integer number of RBs and the integer number of subcarriers may be continuous or non-continuous.

In some embodiments, the number of frequency domain resource units included in the first sub-band and/or the second sub-band (must) be a multiple of N1 and/or a common multiple of N2, N3 and N4. For example, N1=2 or 4, N2=2, N3=3, N4=5, or they may be other values; however, it is not limited thereto.

In some embodiments, the first sub-band and the second sub-band may also be referred to as uplink sub-bands (UL sub-bands), or uplink SBFD sub-bands, or SBFD uplink sub-bands, or uplink RB sets (i.e. RB sets used for uplink), or uplink SBFD RB sets, or SBFD uplink RB sets, and the embodiments of this disclosure are not limited thereto.

In some embodiments, the third sub-band may also be referred to as a downlink sub-band (DL sub-band), or a downlink SBFD sub-band, or an SBFD downlink sub-band, or a downlink RB set (i.e. an RB set for downlink), or a downlink SBFD RB set, or an SBFD downlink RB set; however, the embodiments of this disclosure are not limited thereto.

How to indicate the frequency domain location of the first sub-band shall be described below first.

In some embodiments, the first indication information and/or the second indication information indicate(s) the frequency domain location of the first sub-band for one or more cells. The frequency location of the first sub-band for one cell shall be described below. For a case of multiple cells, frequency domain locations of the first sub-bands of the cells are indicated in a method described below.

In some embodiments, one or more first sub-bands may be configured for a cell. For example, different first sub-bands are for different SCSs and/or different (DL and/or UL) SCS-specific carriers. For another example, for a cell, frequency domain location(s) of one or more first sub-bands is/are configured for only one SCS. The one SCS is or is not an SCS of a (DL and/or UL) SCS-specific carrier. For example, the one SCS is greater than or equal to an SCS configured by (DL and/or UL) scs-SpecificCarrierList, or, the one SCS is or is not an SCS of a (DL and/or UL) BWP. For example, the one SCS is greater than or equal to an SCS of any (DL and/or UL) BWP.

In some embodiments, only (at most) one first sub-band may be configured for a cell. For example, for a cell, it is configured only for one SCS and/or for one (downlink and/or uplink) SCS-specific carrier or one pair of (downlink and/or uplink) SCS-specific carriers and/or there is only frequency domain location of one first sub-band for one (downlink and/or uplink) BWP or one pair of (downlink and/or uplink) BWPs.

In some embodiments, one pair of downlink SCS-specific carrier and uplink SCS-specific carrier have identical BWP IDs and/or SCSs and/or center frequencies and/or starts and/or ends and/or bandwidths.

In some embodiments, one pair of downlink BWP and uplink BWP have identical BWP IDs and/or SCSs and/or center frequencies and/or starts and/or ends and/or bandwidths.

In some embodiments, the first indication information is cell-specific (or common) and the second indication information is UE-specific (or dedicated), or both the first indication information and the second indication information are cell-specific or UE-specific. For example, if the first indication information and/or the second indication information or an IE including the first indication information and/or the second indication information is/are included in an IE or message dedicated to parameters configuring cell-specific, it indicates that the first indication information and/or the second indication information is/are cell-specific, and if the first indication information and/or the second indication information or the IE including the first indication information and/or the second indication information is/are included in the IE or message dedicated to parameters configuring UE-specific/dedicated, it indicates that the first indication information and/or the second indication information is/are UE-specific. However, it is not limited thereto, and in some cases, even if the first indication information and/or the second indication information is/are included in the UE-specific/dedicated IE or message, they may also be cell-specific.

In some embodiments, in a case where the terminal equipment receives the first indication information and the second indication information, the second indication information rewrites/overlays/replaces first configuration included in the first indication information (e.g. rewriting/overlaying/replacing all or a part of information in all or a part of the first configuration included in the first indication information), or the first indication information is ignored/discarded/invalidated. For example, in the case where the terminal equipment receives the first indication information and the second indication information, the first configuration or the second configuration included in the second indication information may rewrite/overlay/replace configuration included in the first indication information corresponding to (or having/associated with/for) identical indices and/or identical SCSs and/or identical SCS-specific carriers and/or identical BWPs, or the terminal equipment takes the second indication information as a reference, and all configurations in the first indication information are ignored/discarded/invalidated. The first configuration and the second configuration shall be explained later. For the first mode, taking that the first configuration or the second configuration included in the second indication information may rewrite/overlay/replace the configuration included in the first indication information corresponding to the SCSs and/or identical SCS-specific carriers as an example, if the first indication information indicates the first sub-band for an SCS-specific carrier of SCS=15kHz and the second indication information also indicates the first sub-band for the SCS-specific carrier of SCS=15kHz, the terminal equipment determines the first sub-band for the SCS-specific carrier of SCS=15 kHz according to the second indication information and ignores the first indication information, and/or determines the second sub-band according to the first sub-band for the SCS-specific carrier of SCS=15 kHz indicated by the second indication information.

In some embodiments, the first indication information and/or the second indication information indicate(s) one or more first sub-bands, wherein the first indication information and the second indication information include (identical or different) information for indicating frequency domain locations of identical first sub-bands and/or information for indicating frequency domain locations of different first subbands. For example, for the same first sub-band, the first indication information includes information indicating a frequency domain starting location of the first sub-band, and the second indication information includes information indicating a bandwidth of the first sub-band, etc., or, both the first indication information and the second indication information include information indicating the starting and bandwidth of the first sub-band, and the terminal equipment takes the second indication information as a reference. For another example, for different first sub-bands, the first indication information includes information indicating a frequency domain location of a first sub-band 1, and the second indication information includes information indicating a frequency domain location of a first sub-band 2, which shall not be illustrated herein one by one.

In some embodiments, the first indication information and/or the second indication information is/are carried by higher layer signaling and/or PHY (physical layer) signaling or transmitted via the higher layer signaling and/or PHY signaling or is/are included in the higher layer signaling and/or PHY signaling. The first indication information and the second indication information are carried by identical or different signaling or messages or information elements (IEs). For example, the first indication information and the second indication information are respectively included in a system message and a dedicated RRC message. For another example, the first indication information and the second indication information are respectively included in different (numbered) system messages. For a further example, the first indication information and the second indication information are respectively included in RRC signaling and PHY signaling.

In some embodiments, all or a part of the first indication information and/or the second indication information is carried by RRC signaling.

In some embodiments, the first indication information and the second indication information are included in an RRC message and/or a third configuration,
the message including one or more of the following:
an MIB;
SIB1;
a system information (such as SystemInformation) message;
an RRC setup (such as RRCSetup) message;
an RRC resume (such as RRCResume) message; and
an RRC reconfiguration (such as RRCReconfigure) message;
and wherein,
the third configuration (such as an RRC IE) includes one or more of the following:
   SIB downlink frequency information (e.g. FrequencyInfoDL-SIB);
   an SIB downlink common configuration (such as DownlinkConfigCommonSIB);
   SIB uplink frequency information (e.g. FrequencyInfoUL-SIB);
   an SIB uplink common configuration (such as UplinkConfigCommonSIB);
   an SIB serving cell common configuration (e.g. ServingCellConfigCommonSIB);
   downlink frequency information (such as FrequencyInfoDL);
   a downlink common configuration (e.g. DownlinkConfigCommon);
   an uplink frequency information (such as FrequencyInfoUL);
   an uplink common configuration (such as UplinkConfigCommon);
   a serving cell common configuration (such as ServingCellConfigCommon);
   a serving cell configuration (such as ServingCellConfig); or
   SIBx.

For example, FrequencyInfoDL-SIB is included in DownlinkConfigCommonSIB, FrequencyInfoUL-SIB may be included in UplinkConfigCommonSIB, DownlinkConfigCommonSIB and UplinkConfigCommonSIB may be included in ServingCellConfigCommonSIB, ServingCellConfigCommonSIB may be included in SIB1, FrequencyInfoDL may be included in DownlinkConfigCommon, FrequencyInfoUL may be included in UplinkConfigCommon, DownlinkConfigCommon and UplinkConfigCommon may be included in ServingCellConfigCommon, and ServingCellConfigCommon and ServingCellConfig may be included in the RRC setup (RRCSetup) message and/or the RRC resume (RRCResume) message and/or the RRC reconfiguration (RRCReconfiguration) message; however, it is not limited thereto.

SIBx is a system information block different from SIB1, for example x=15 or is other values, and/or, it is dedicated to SBFD operations, and/or, it is included in a system information (SystemInformation) message, and/or, only a UE (e.g. an SBFD-aware UE) satisfying certain conditions (including supporting specific capabilities, such as supporting SBFD operations and/or being able to be aware of SBFD operations (of the network device) and/or being able to perform corresponding (optimized/enhanced) signal transmission and reception (for SBFD operations) (in a case where the network device executes SBFD operations)) will receive SIBx; however, it is not limited thereto.

In some embodiments, different information items included in the first indication information and/or the second indication information (possibly included items shall be described later) are included in identical or different messages and/or third configurations. For example, information for indicating an SCS and/or a reference point is included in the system message, and information for indicating an index and/or frequency domain location(s) of one first sub-band or a group of first sub-bands is included in the dedicated RRC message, and so on; however, it is not limited thereto.

In some embodiments, the first indication information and/or the second indication information include(s) one or more first configurations.

In some embodiments, the first indication information and/or the second indication information is/are, for example, a list of (including one or more) first configurations, the first configuration(s) including a first information unit and/or one or more information fields (used to indicate the frequency domain location of the first sub-band).

In some embodiments, the first configuration includes information (or an information field) used for indicating one or more of the following: (a) frequency domain location(s) ((a) start(s) and/or (an) end(s) and/or (a) center(s) and/or (a) bandwidth(s)) of one or one group of first sub-bands; a first index; a second index; a third index; a first SCS; a second SCS; a first reference point; or a second reference point.

In some embodiments, when the first configuration includes frequency domain locations of one group of first sub-bands, the first configuration separately or jointly configures frequency domain locations of different first sub-bands in the group of first sub-bands. For example, for each first sub-band in the group, a start and/or an end and/or a center and/or a bandwidth of the first sub-band is/are separately configured; or, for each first sub-band in the group, there may be a default relationship (or pattern) between locations of each first sub-band, that is, frequency domain locations of different first sub-bands in the group are jointly configured.

In some embodiments, the first configuration optionally or conditionally optionally includes information indicating one or more of the above items, or, in other words, the information of one or more of the above items may be optionally present or conditionally optionally present in the first configuration. For example, the first configuration is SCS-SpecificCarrier, which optionally or conditionally optionally includes information for indicating (a) frequency domain location(s) of one or one group of first sub-bands. That 'conditionally optionally include' or 'conditionally optionally present' includes that, for example, only when SCS-SpecificCarrier is for downlink, the information may be optionally included, or the information may be optionally present; otherwise, the information is not included, or the information is absent.

In some embodiments, the first configuration configures the frequency domain location of the first sub-band based on the first SCS and/or the second SCS and/or the third SCS and/or the first reference point and/or the second reference point and/or a third reference point. The first SCS, second SCS and third SCS are used to indicate the frequency domain location of the first sub-band, and may be respectively referred to as a first reference SCS, a second reference SCS, and a third reference SCS.

In some embodiments, if the first configuration does not include information for indicating the first SCS and/or the second SCS, the first configuration indicates the frequency domain location of the first sub-band based on the third SCS, and if the first configuration does not include information for indicating the first reference point and/or the second reference point, the first configuration indicates the frequency domain location of the first sub-band based on the third reference point. How to specifically indicate shall be described later.

In some embodiments, the terminal equipment receives the first indication information and/or the second indication information and/or the first configuration and/or the second configuration transmitted by the network device, and the indicated frequency domain location of the first sub-band includes the start and/or bandwidth and/or end and/or center of the first sub-band, wherein the start/end/center may be represented/indicated by an offset/offsets between it/them and (a) reference point(s) thereof. The reference point(s) shall be descried later. The reference points of the start, end and center may be identical or different.

In some embodiments, the first indication information and/or the second indication information and/or the first configuration and/or the second configuration indicate(s) the frequency domain location of the first sub-band by indicating at least two of the start and/or bandwidth and/or end and/or center of the first sub-band. For example, the first indication information and/or the second indication information indicate(s) the start and bandwidth of the first sub-band, or the center and bandwidth (e.g. the bandwidth corresponds to the number of frequency domain resource units included from the start to the end, or only corresponds to the number of frequency domain resource units included from the center to the start and/or the end respectively), or the start and end; however, it is not limited thereto. In some embodiments, that the first indication information and/or the second indication information and/or the first configuration and/or the second configuration indicate(s) the frequency domain location of the first sub-band is equivalent to indicating frequency domain resource units included in the first sub-band. For example, the start of the first sub-band is a start of a first/(frequency domain location) lowest frequency domain resource unit included in the first sub-band, the end of the first sub-band is an end of a last/(frequency domain location) highest frequency domain resource unit included in the first sub-band, the center of the first sub-band is a center of a frequency domain resource unit included in the first sub-band, and the bandwidth of the first sub-band is the number of frequency domain resource units included in the first sub-band. Taking that the frequency domain resource unit is an RB as an example, the start of the first sub-band is a frequency location of SC 0 of a first/(frequency domain location) lowest RB included in the first sub-band, the end of the first sub-band is a frequency location of SC 11 of a last/(frequency domain location) highest RB included in the first sub-band, and the center of the first sub-band is a frequency location of a center SC of a frequency domain resource unit included in the first sub-band.

In some embodiments, the first indication information and/or the second indication information and/or the first configuration and/or the second configuration jointly indicate(s) or respectively indicate(s) at least two of the start and/or bandwidth and/or end and/or center of the first sub-band.

The joint indication refers to indicating the start and bandwidth by using identical/coinciding/overlapping information bits, such as indicating the start and bandwidth by using the same higher layer parameter. For example, the start and bandwidth are jointly mapped/encoded to a value (such as an RIV, resource indication value), wherein one RIV corresponds to one starting $RB {SB}_{ul}^{start , μ}$ and the number/a length *L_{RBs}* ( (such as corresponding to ${SB}_{ul}^{size , μ}$) of continuous RBs. Thus, the higher layer parameter may indicate the start and bandwidth by indicating an RIV. The RIV is, for example, defined in a manner as follows: 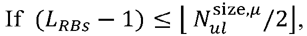 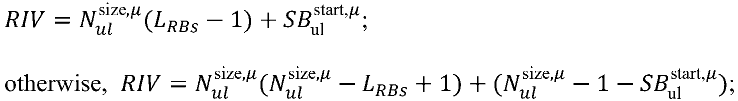 where, *L_{RBs}* ≥ 1 and shall not exceed ${N}_{ul}^{size , μ} - {SB}_{ul}^{start , μ}$, and ${N}_{ul}^{size , μ}$ is, for example, a (pre-defined or pre-configured) integer, for example, ${N}_{ul}^{size , μ} = 275$.

Respectively indicating refers to indicating the start and bandwidth respectively by using different/non-coinciding/non-overlapping/mutually independent information bits, such as indicating the start and bandwidth respectively by using two higher layer parameters.

In some embodiments, the method may further include: the terminal equipment receives fifth indication information, the fifth indication information being used for releasing (all or a part of) a first configuration included in the first indication information and/or the second indication information. For example, the fifth indication information may include the above first index, thereby indicating releasing (deleting) the first configuration identified by a first index in the fifth indication information.

The first indication information and/or the second indication information and/or the fifth indication information shall be illustrated below.

In some examples, for example, the first indication information and/or the second indication information is/are represented by scc-SpecificCarrierList, and SCS-SpecificCarrier therein (e.g. corresponding to the first configuration and/or the second configuration and/or a first IE and/or a second IE) is used to indicate the frequency domain location of the first sub-band. That is, the first configuration and/or the second configuration and/or the first IE configure(s) an SCS-spa first sub-band for an SCS-specific carrier thereon, or configure(s) a first sub-band on a corresponding SCS-specific carrier, or configure(s) a first sub-band for subcarrierSpacing in SCS-SpecificCarrier. subcarrierSpacing in SCS-SpecificCarrier corresponds to, for example, the first SCS or the second SCS, and offsetToCarrier in SCS-SpecificCarrier corresponds to, for example, the first reference point or the second reference point; however, it is not limited thereto.

Method 1: adding an information field sub-bandUL (- r19) into SCS-SpecificCarrier to indicate the frequency domain location of the first sub-band (based on the first SCS and/or the second SCS and/or the third SCS). For example, the start and bandwidth are jointly mapped/encoded to a value (such as an RIV), and sub-bandUL(-r19) (such as an RIV indicator) may indicate a (group/pair of) start and bandwidth of a corresponding first sub-band by indicating this value. However, the embodiments of this disclosure are not limited thereto, and information fields indicating a start and bandwidth may also be added respectively into SCS-SpecificCarrier, which shall not be illustrated herein one by one.

### SCS-SpecificCarrier information element

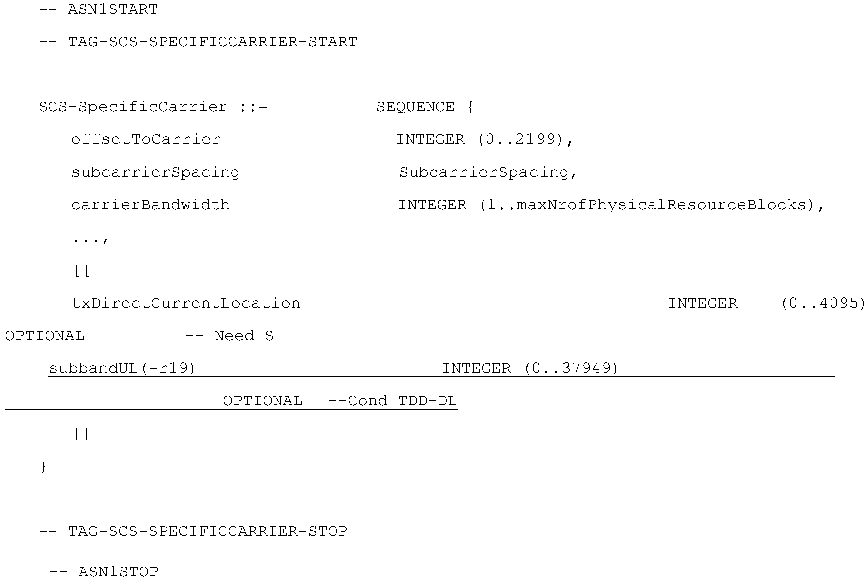

Method 2: introducing/adopting a third IE (used to indicate a frequency domain location of a first sub-band), and adding an information field subbandUL(-r19) including the third IE (SubbandUL(-r19)) into SCS-SpecificCarrier to indicate the frequency domain location of the first sub-band.

### SCS-SpecificCarrier information element

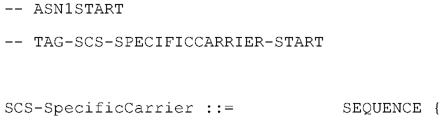

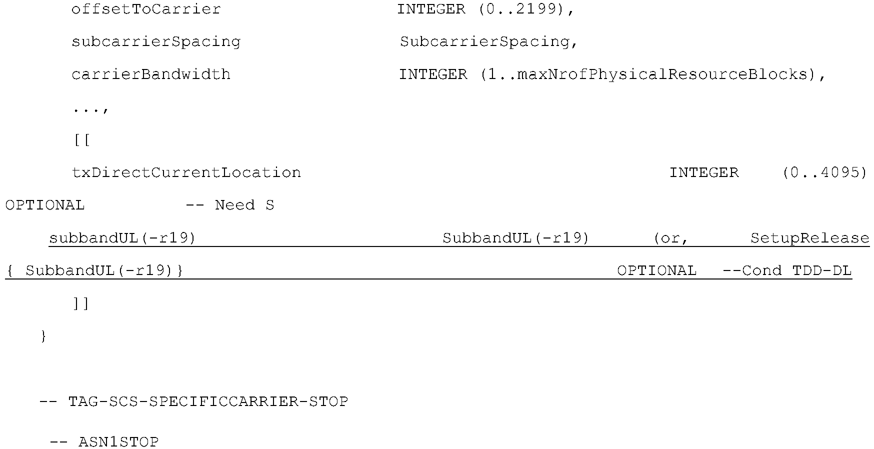

Example 1 of the (newly introduced) third IE is as follows: the third IE may include an information field refsubcarrierSpacing(-r19) for indicating a reference SCS (e.g. corresponding to the first or second SCS; however, it is not limited thereto) and an information field startAndBandwidth(-r19) for indicating a frequency domain location of a first sub-band. For example, the start and bandwidth are jointly mapped/encoded to a value (e.g. an RIV value) (e.g. an RIV indicator), and startAndBandwidth(-r19) may indicate a start and bandwidth of a corresponding (group/pair of) first sub-band by indicating this value.

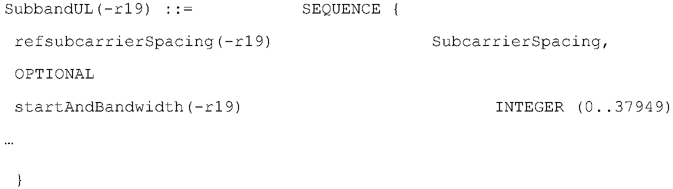

Example 2 of the (newly introduced) third IE is as follows: the third IE may include an information field refsubcarrierSpacing(-r19) for indicating a reference SCS (e.g. corresponding to the first or second SCS; however, it is not limited thereto) and two information fields startCRB(-r19) and nrofCRBs(-r19) for indicating frequency domain locations of first sub-bands, which respectively indicate a starting CRB (a start of the first sub-bands) and the number of CRBs (bandwidths of the first sub-bands). For example, startCRB(-r19) (and nrofCRBs(-r19)) indicate(s) the starting CRB (e.g. indicating an offset therebetween) based on offsetToCarrier (i.e. a start of a corresponding SCS-specific carrier) in SCS-SpecificCarrier where it is located, for example, a value of maxNrofPhysicalResourceBlocks may be 275.

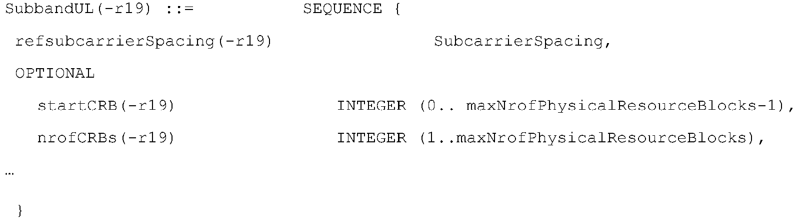

Example 3 of the (newly introduced) third IE is as follows: the third IE may include an information field refsubcarrierSpacing(-r19) for indicating a reference SCS (e.g. corresponding to the first SCS or second SCS; however, it is not limited thereto) and two information fields for indicating frequency domain locations of first sub-bands, which respectively indicate a start of the first sub-bands (offsetToCarrier(-r19)) and a first sub-band bandwidth (subbandBandwidth(-r19)). For example, offsetToCarrier(-r19) may be the offset relative to point A.

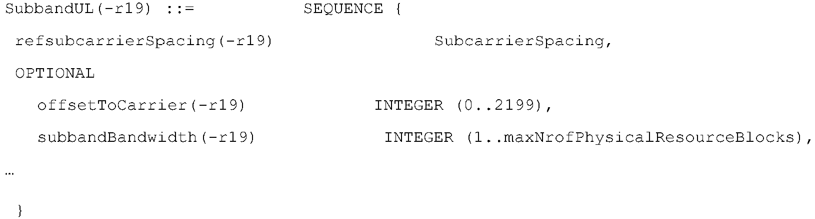

Method 3: introducing/adopting a fourth IE (used to indicate (a) frequency domain location(s) of a first sub-band and/or a third sub-band and/or a guard interval), and adding an information field subbands(-r19) including the fourth IE (Subbands (-r19)) into SCS-SpecificCarrier to indicate the frequency domain location of the first sub-band.

### SCS-SpecificCarrier information element

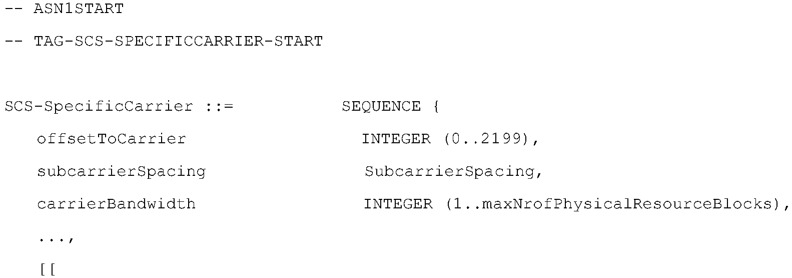

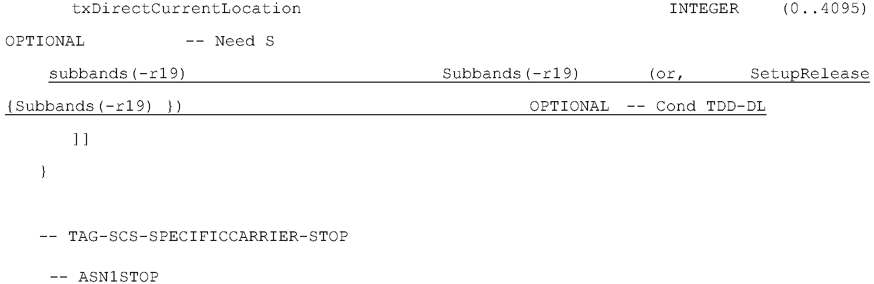

Example 1 of the (newly introduced) fourth IE is as follows: the fourth IE may include the above third IE, which shall not be described herein any further. For example, refSubcarrierSpacing(-r19) (in Subbands (-r19)) corresponds to either the first SCS or the second SCS; however, it is not limited thereto.

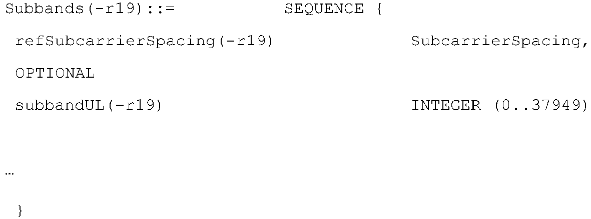

Example 2 of the (newly introduced) fourth IE is as follows: the fourth IE may include the above third IE, which shall not be described herein any further.

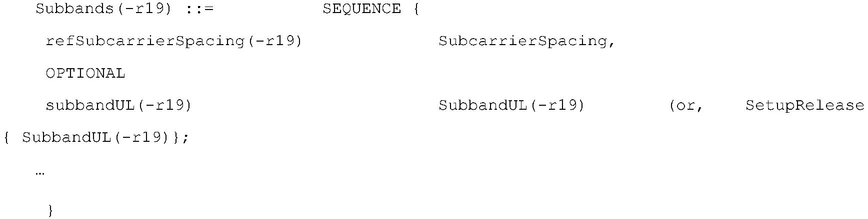

In some examples, for example, the first indication information and/or the second indication information is/are represented by (new) subbandsPerSCS-List(-r19), and (newly introduced) SubbandsPerSCS(-r19) (e.g. corresponding to the first configuration and/or the second configuration and/or the first IE and/or the second IE) therein is used to indicate the frequency domain location of the first sub-band. SubbandsPerSCS(-r19) includes, for example, an information field subcarrierSpacing(-r19) for indicating an SCS. SubbandsPerSCS(-r19) configures the first sub-band for an (DL and/or UL) SCS-specific carrier to which subcarrierSpacing(-r19) corresponds, or in other words, configures the first sub-band for subcarrierSpacing(-r19). subcarrierSpacing(-r19) in SubbandsPerSCS(-r19), for example, corresponds to the first SCS or the second SCS; however, it is not limited thereto.

For example, SubbandsPerSCS(-r19) may include an information field for indicating a frequency domain location of a first sub-band and/or an information field including the third IE (as shown in Example 1 below) or the fourth IE (as shown in Example 2 below). Examples of the third IE and the fourth IE are as described above, and shall not be repeated herein any further.

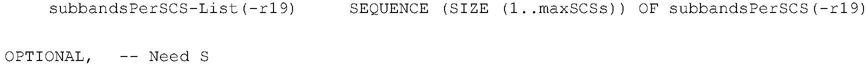

Example 1-1 for SubbandsPerSCS(-r19): reference may be made to above refsubcarrierSpacing and sub-bandUL for meanings of refsubcarrierSpacing(-r19) and subbandUL(-r19) (the third IE), which shall not be repeated herein any further.

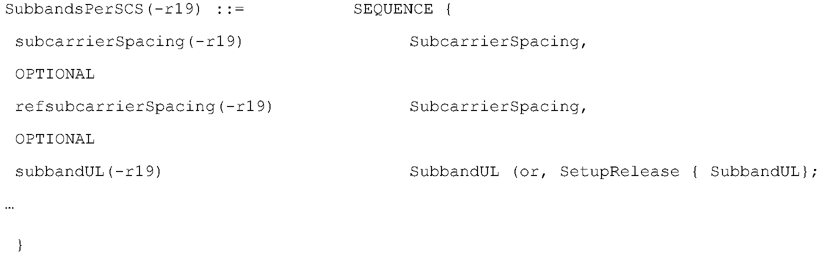

Example 1-2 for SubbandsPerSCS(-r19): reference may be made to above refsubcarrierSpacing and sub-bands for meanings of refsubcarrierSpacing(-r19) and subbands(-r19) (the fourth IE), which shall not be repeated herein any further.

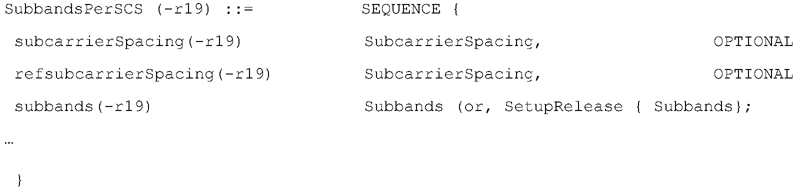

In some examples, for example, the first indication information and/or the second indication information is/are denoted by (new) subbandsPerSCS-ToAddModList(-r19), and (newly introduced) SubbandsPerSCS(-r19) (e.g. corresponding to the first configuration and/or the second configuration and/or the first IE and/or the second IE) therein is used to indicate the frequency domain location of the first sub-band.

Form 1: In this configuration method, fifth indication information (subbandsPerSCS-ToReleaseList(-r19)) may be introduced. The fifth indication information may include a first index (SubbandsPerSCS ID(- r19)), thereby indicating releasing (deleting) a first configuration (SubbandsPerSCS(-r19)) identified by the first index. However, this is illustrative only, and the embodiments of this disclosure are not limited thereto.

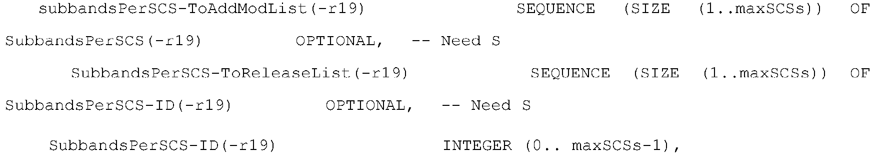

Example 2-1 for SubbandsPerSCS(-r19): a different from Example 2-1 is that a first index (subbandsPerSCS-ID(r-19)) is further included.

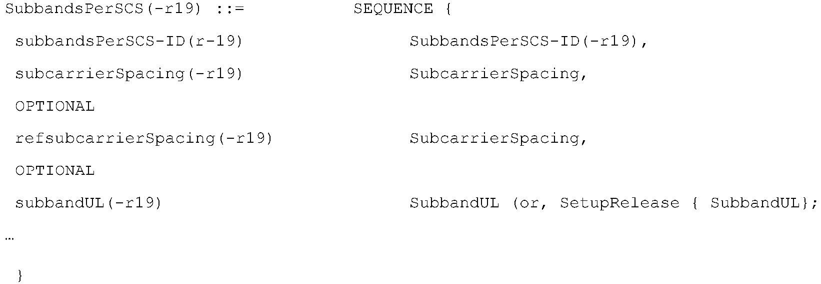

Example 2-2 for SubbandsPerSCS(-r19): a different from Example 2-1 is that a first index (SubbandsPerSCS-ID(r-19)) is further included.

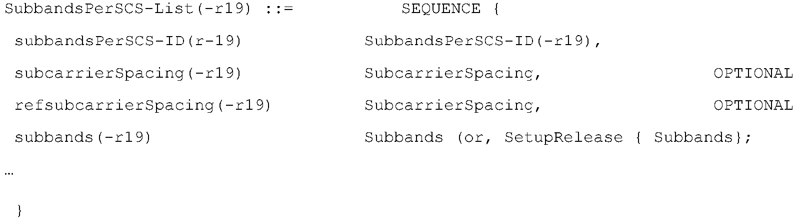

Form 2: in this configuration method, (new) subbandsPerSCS-List(-r19) is introduced, which, when set to be Setup, serves as the first indication information and/or second indication information, and when set to be Release, serves as fifth indication information. Implementation of SubbandsPerSCS(-r19) (a fifth IE) is as described above, which shall not be repeated herein any further.

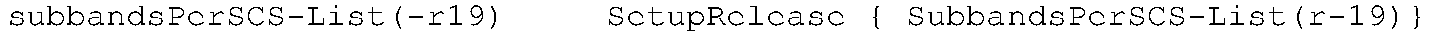

The third SCS and the third reference point shall be described below.

In some embodiments, the third SCS includes one or more of the following:
(one or more) SCSs indicated by third indication information (assuming that the third indication information is not included in a corresponding first configuration); for example, the third indication information is subcarrierSpacing in SCS-SpecificCarrier (associated with the first configuration) or referenceSubcarrierSpacing in TDD-UL-DL-ConfigCommon;
an SCS for TDD uplink and downlink configuration, such as (an SCS indicated by) referenceSubcarrierSpacing in TDD-UL-DL-ConfigCommon;
an SCS of a carrier, such as including (an SCS indicated by) subcarrierSpacing of SCS-SpecificCarrier in scs-SpecificCarrierList for downlink and uplink;
a specific SCS in SCSs of a carrier, such as including a specific SCS (such as a minimum/lowest/maximum/highest SCS) in (an SCS indicated by) subcarrierSpacing (of SCS-SpecificCarrier) in scs-SpecificCarrierList for downlink and uplink;
an SCS of a downlink carrier, such as including (an SCS indicated by) subcarrierSpacing (of SCS-SpecificCarrier) in scs-SpecificCarrierList for downlink;
an SCS of uplink carrier, such as including (an SCS indicated by) subcarrierSpacing (of SCS-SpecificCarrier) in scs-SpecificCarrierList for uplink;
a first specific SCS in SCSs of a downlink carrier, such as including a first specific SCS (such as a first minimum/lowest/maximum/highest SCS) in (an SCS indicated by) subcarrierSpacing of SCS-SpecificCarrier in scs-SpecificCarrierList for downlink, wherein the first SCS refers to, for example, (an SCS indicated by) subcarrierSpacing of a first SCS-SpecificCarrier in scs-SpecificCarrierList, or, (an SCS indicated by) subcarrierSpacing of downlink SCS-SpecificCarrier with which the first configuration is associated, or, (an SCS indicated by) subcarrierSpacing of downlink SCS-SpecificCarrier corresponding to uplink SCS-SpecificCarrier with which the first configuration is associated, or, an SCS with a corresponding downlink SCS-specific carrier with a lowest/highest starting location;
a second specific SCS in SCSs of an uplink carrier, such as including a second specific SCS (such as a first minimum/lowest/maximum/highest SCS) in an SCS indicated by subcarrierSpacing of SCS-SpecificCarrier in scs-SpecificCarrierList for uplink, wherein the first SCS refers to, for example, (an SCS indicated by) subcarrierSpacing of a first SCS-SpecificCarrier in scs-SpecificCarrierList, or, (an SCS indicated by) subcarrierSpacing of uplink SCS-SpecificCarrier with which the first configuration is associated, or, (an SCS indicated by) subcarrierSpacing of uplink SCS-SpecificCarrier corresponding to downlink SCS-SpecificCarrier with which the first configuration is associated, or, an SCS with a corresponding uplink SCS-specific carrier with a lowest/highest starting location;
a specific SCS in first specific SCSs in a downlink carrier and second specific SCSs in an uplink carrier, such as including a specific SCS (such as a minimum/lowest/maximum/highest SCS) in the above first specific SCS and second specific SCS;
a specific SCS in second specific SCSs in SCSs of a downlink carrier and SCSs of an uplink carrier, such as including a specific SCS (such as a minimum/lowest/maximum/highest SCS) in the above SCSs of a downlink carrier and second specific SCS;
a specific SCS in a first specific SCS in SCSs of a downlink carrier and SCSs of an uplink carrier, such as including a specific SCS (such as an minimum/lowest/maximum/highest SCS) in the above first specific SCS and the SCSs of the uplink carrier;
a specific SCS in SCSs of a downlink carrier and SCSs of an uplink carrier, such as including a specific SCS (such as a minimum/lowest/maximum/highest SCS) in the above SCSs of the downlink carrier and the SCSs of the uplink carrier;
an SCS of a first specific carrier of a downlink (carrier), such as including (an SCS indicated by) subcarrierSpacing of a first specific carrier (such as first SCS-SpecificCarrier and/or SCS-SpecificCarrier with a corresponding minimum/lowest/maximum/highest SCS in scs-SpecificCarrierList for downlink, or (an SCS indicated by) subcarrierSpacing of downlink SCS-SpecificCarrier with which the first configuration is associated, or (an SCS indicated by) subcarrierSpacing of downlink SCS-SpecificCarrier corresponding to uplink SCS-SpecificCarrier with which the first configuration is associated, wherein the minimum/lowest SCS refers to, for example, an SCS with a corresponding SCS configuration *µ* and/or an SCS size Δ*f* having minimum values, and the maximum/highest SCS refers to, for example, an SCS with a corresponding SCS configuration *µ* and/or an SCS size Δ*f* having maximum values, and so on, which shall not be repeated herein any further;
an SCS of a second specific carrier of an uplink (carrier), such as including (an SCS indicated by) subcarrierSpacing of the second specific carrier (such as first SCS-SpecificCarrier and/or SCS-SpecificCarrier with a corresponding SCS that is minimum/lowest/maximum/highest) in scs-SpecificCarrierList for uplink, or, (an SCS indicated by) subcarrierSpacing in uplink SCS-SpecificCarrier with which the first configuration is associated, or, (an SCS indicated by) subcarrierSpacing in uplink SCS-SpecificCarrier corresponding to downlink SCS-SpecificCarrier with which the first configuration is associated;
a specific SCS in SCSs of a downlink (carrier) first specific carrier and SCSs of an uplink (carrier) second specific carrier, such as including a specific SCS (such as a minimum/lowest/maximum/highest SCS) in the SCSs of the above first specific carrier and the SCSs of the above second specific carrier;
a specific SCS in SCSs of a downlink carrier and SCSs of a second specific carrier, such as including a specific SCS (such as a minimum/lowest/maximum/highest SCS) in the SCSs of the above downlink carrier and the SCSs of the above second specific carrier;
a specific SCS in SCSs of a first specific carrier of a downlink (carrier) and SCSs of an uplink carrier, such as including a specific SCS (such as a minimum/lowest/maximum/highest SCS) in the SCSs of the above first specific carrier and the SCSs of the above uplink carrier;
an SCS of a third specific carrier of downlink (carrier) and uplink (carrier), such as including (an SCS indicated by) subcarrierSpacing of a third specific SCS (such as SCS-SpecificCarrier with a corresponding SCS that is minimum/lowest/maximum/highest) in above scs-SpecificCarrierList for downlink and uplink;
an SCS of a BWP;
a specific SCS in SCSs of a BWP (such as a minimum/lowest/maximum/highest SCS);
an SCS of a downlink BWP;
an SCS of an uplink BWP;
a first specific SCS in SCSs of a downlink BWP (such as a minimum/lowest/maximum/highest SCS);
a second specific SCS in SCSs of an uplink BWP (such as a minimum/lowest/maximum/highest SCS);
a specific SCS (such as a minimum/lowest/maximum/highest SCS) in a first specific SCS in SCSs of a downlink BWP and a second specific SCS in SCSs of an uplink BWP;
a specific SCS (such as a minimum/lowest/maximum/highest SCS) in SCSs of a downlink BWP and a second specific SCS in SCSs of an uplink BWP;
a specific SCS (such as a minimum/lowest/maximum/highest SCS) in a first specific SCS in SCSs of a downlink BWP and SCSs of an uplink BWP;
a specific SCS (such as a minimum/lowest/maximum/highest SCS) in SCSs of a downlink BWP and SCSs of an uplink BWP;
an SCS of a downlink (BWP) first specific BWP (such as a DL BWP with a corresponding SCS that is minimum/lowest/maximum/highest);
an SCS of an uplink (BWP) second specific BWP (such as a UL BWP with a corresponding SCS that is minimum/lowest/maximum/highest);
a specific SCS (such as a minimum/lowest/maximum/highest SCS) in an SCS of a downlink (BWP) first specific BWP and an SCS of an uplink (BWP) second specific BWP;
a specific SCS (such as a minimum/lowest/maximum/highest SCS) in SCSs of a downlink BWP and an SCS of a second specific BWP of uplink (BWP);
a specific SCS (such as a minimum/lowest/maximum/highest SCS) in an SCS of a first specific BWP of downlink (BWP) and SCSs of an uplink BWP;
an SCS of a third specific BWP of downlink (BWP) and uplink (BWP) (such as a DL or UL BWP with a corresponding SCS that is minimum/lowest/maximum/highest); or
a pre-defined SCS (such as pre-defined based on a frequency range and/or a frequency band and/or a carrier; for example, identical or different SCSs are respectively defined for frequency ranges FR1 and FR2-1; for example, for FR1, SCS = 15 kHz, and for FR2-1, SCS = 60 kHz).

In some embodiments, the first specific carrier includes a downlink SCS-specific carrier with which the first configuration is associated, or a downlink SCS-specific carrier corresponding to the uplink SCS-specific carrier with which the first configuration is associated.

In some embodiments, the second specific carrier includes an uplink SCS-specific carrier with which the first configuration is associated, or an uplink SCS-specific carrier corresponding to the downlink SCS-specific carrier with which the first configuration is associated.

For example, the (downlink and/or uplink) SCS-specific carrier with which the first configuration is associated is predefined (such as being determined according to the first SCS or second SCS in the first configuration; however, it is not limited thereto) or indicated (such as being indicated by the first index or second index in the first configuration (described later), or being indicated by another indication information (such as sixth indication information)). For the case of predefined manner, such as being determining according to the first SCS or the second SCS in the first configuration, the first configuration includes information for indicating the first SCS and/or the second SCS, and is associated with (downlink and/or uplink) an SCS-specific carrier for the first SCS or the second SCS. For example, the first configuration is associated with a downlink SCS-specific carrier for the first SCS and an uplink SCS-specific carrier for the second SCS, or the first configuration is associated with a downlink SCS-specific carrier and an uplink SCS-specific carrier which the downlink SCS-specific carrier corresponds for the first SCS or the second SCS, or the first configuration is associated with an uplink SCS-specific carrier and a downlink SCS-specific carrier which the uplink SCS-specific carrier corresponds for the first SCS or the second SCS, or the first configuration is associated with a downlink SCS-specific carrier for the first SCS or the second SCS, or the first configuration is associated with an uplink SCS-specific carrier for the first SCS or the second SCS.

In some embodiments, there exists a correspondence between the downlink SCS-specific carrier and the uplink SCS-specific carrier. As an example, a downlink SCS-specific carrier corresponds to an uplink SCS-specific carrier (including one-to-one correspondence), and/or, a downlink SCS-specific carrier corresponds to multiple uplink SCS-specific carriers, and/or, multiple downlink SCS-specific carriers correspond to one uplink SCS-specific carrier, and/or, multiple downlink SCS-specific carriers correspond to multiple uplink SCS-specific carriers. As an example, the uplink SCS-specific carrier correspond to the downlink SCS-specific carrier according to an order (configured in a list scs-SpecificCarrierList) and/or an index (such as the first index or the second index) and/or a starting location and/or an SCS and/or a bandwidth and/or an ending location and/or whether information for indicating the frequency domain location of the first sub-band is included. Taking the order as an example, for example, a first SCS-SpecificCarrier in scs-SpecificCarrierList for downlink corresponds to a first SCS-SpecificCarrier in scs-SpecificCarrierList for uplink, a second SCS-SpecificCarrier in scs-SpecificCarrierList for downlink corresponds to a second SCS-SpecificCarrier in scs-SpecificCarrierList for uplink, and so on.

In some embodiments, SCS sizes and/or starting (frequency location) and/or ending (frequency locations) and/or bandwidths of the corresponding uplink and downlink SCS-specific carriers are identical or different.

In some embodiments, the third reference point includes one or more of the following:
a reference point indicated by fourth indication information (assuming that the fourth indication information is not included in a corresponding first configuration), such as a frequency location indicated by the information for indicating Point A;
point A;
a (starting or specific subcarrier of) specific common RB (such as CRB 0), such as (a starting or SC 0 of) CRB 0 for the above first SCS and/or the second SCS and/or the third SCS;
a first location of a carrier (such as a start and/or end and/or a center, etc.);
s specific location in a first location of a carrier;
a second location of a downlink carrier;
a third location of an uplink carrier;
a first specific location in a second location of a downlink carrier;
a second specific location in a third location of an uplink carrier;
s specific location in a first specific location in a second location of a downlink carrier and a second specific location in a third location of an uplink carrier;
a specific location in a second location of a downlink carrier and a second specific location in a third location of an uplink carrier;
a specific location in a second specific location in a second location of a downlink carrier and a third location of an uplink carrier;
a specific location in a second location of a downlink carrier and a third location of an uplink carrier;
a second location of a first specific carrier of a downlink (carrier);
a third location of a second specific carrier of an uplink (carrier);
a specific location in a second location of a first specific carrier of a downlink (carrier) and a third location of a second specific carrier of an uplink (carrier);
a specific location in a second location of a first specific carrier of a downlink (carrier) and a third location of a second specific carrier of an uplink (carrier);
a specific location in a second location of a first specific carrier of a downlink (carrier) and a third location of an uplink (carrier);
a first location of a third specific carrier of a downlink (carrier) and a third specific carrier of an uplink (carrier);
a fourth location of a BWP;
a specific location in a fourth location of a BWP;
a fifth location of a downlink BWP;
a sixth location of an uplink BWP;
a first specific location in a fifth location of a downlink BWP;
a second specific location in a sixth location of an uplink BWP;
a specific location in a first specific location in a fifth location of a downlink BWP and a second specific location in a sixth location of an uplink BWP;
a specific location in a fifth location of a downlink BWP and a second specific location of a sixth location of an uplink BWP;
a specific location in a second specific location in a fifth location of a downlink BWP and a sixth location of an uplink BWP;
a specific location in a fifth location of a downlink BWP and a sixth location of an uplink BWP;
a fifth location of a downlink (BWP) first specific BWP;
a sixth location of an uplink (BWP) second specific BWP;
a specific location in a fifth location of a downlink (BWP) first specific BWP and a sixth location of an uplink (BWP) second specific BWP;
a specific location in a fifth location of a downlink BWP and a sixth location of an uplink (BWP) second specific BWP;
a specific location in a fifth location of a downlink (BWP) first specific BWP and a sixth location of an uplink BWP;
a fourth location of downlink (BWP) and uplink (BWP) third specific BWPs; or
a pre-defined frequency location (such as being pre-defined based on a frequency range and/or a frequency band and/or a carrier).

In some embodiments, the first location, second location, third location, fourth location, fifth location and sixth location may be such locations as the start and/or the end and/or the center, etc., and the embodiments of this disclosure are not limited thereto. All of the first location, second location, third location, fourth location, fifth location and sixth location may be the starting locations, or the ending locations, or the center locations, or all of them may have different locational meanings.

In some embodiments, the first index is used to identify the first configuration and/or one or one group of first sub-bands, the second index is used to identify or indicate (downlink and/or uplink) SCS-specific carriers with which the first configuration is associated, and the third index is used to identify or indicate (downlink and/or uplink) BWPs with which the configuration is associated. The third index may be a BWP ID. For example, when the first configuration includes a first index and a second index, it may indicate the first sub-band identified by the first index on the SCS-specific carrier identified by the second index (or, in other words, the first configuration is identified by the first index and is for the (downlink and/or uplink) SCS-specific carrier identified by the second index and/or the (downlink and/or uplink) BWP corresponding to the SCS-specific carrier); or, for example, when the first configuration includes a first index and a third index, it may indicate the first sub-band identified by the first index on the BWP identified by the third index (or, in other words, the first configuration is identified by the first index and is for the (downlink and/or uplink) BWP identified by the third index and/or the (downlink and/or uplink) SCS-specific carrier corresponding to the BWP); or, for example, when the first configuration includes a first index, a second index and a third index, it may indicate the first sub-band identified by the first index on the frequency domain resources where the BWP identified by the third index overlaps with the SCS-specific carrier identified by the second index (or, in other words, the first configuration is identified by the first index and is for the (downlink and/or uplink) SCS-specific carrier identified by the second index and the (downlink and/or uplink) BWP identified by the third index), wherein the SCS-specific carrier is identical to the SCS of the BWP and/or the BWP is within the SCS-specific carrier), which shall not be illustrated herein any further.

In some embodiments, a correspondence between second indices and the SCS-specific carriers is determined according to an order of configurations of the SCS-specific carriers and/or sizes of corresponding SCSs. For example, the SCS-specific carriers correspond in an ascending order of the configurations to the second indices from small to large, wherein a first one of SCS-specific carriers corresponds to a second index 0, a second one of SCS-specific carriers corresponds to a second index 1, and so on. For another example, the SCS-specific carriers correspond in an ascending order of the SCSs to the second indices from small to large, wherein an SCS-specific carrier for a smallest SCS (e.g. SCS=15 kHz) corresponds to a second index 0, an SCS-specific carrier for a secondarily smallest SCS (e.g. SCS=30 kHz) corresponds to a second index 1, and so on.

In some embodiments, the first index is used to identify the first configuration and/or the one or one group of first sub-bands, and is used to indicate (downlink and/or uplink) SCS-specific carriers and/or (downlink and/or uplink) BWPs corresponding to the first configuration. In the embodiments, the first index is equivalent to simultaneously serving as the above second index and/or third index, that is, the first index may simultaneously identify the first configuration and/or the one or one group of first sub-bands and the (downlink and/or uplink) SCS-specific carriers and/or (downlink and/or uplink) BWPs corresponding to the first configuration.

In some embodiments, the first SCS and/or the second SCS (must be) is/are equal to or not less than the third SCS, and/or the first reference point and/or the second reference point is/are within or not within the frequency range of the carrier. In some embodiments, the first SCS, the second SCS and the third SCS include downlink and uplink SCSs (i.e. one or two of the first SCS, the second SCS and the third SCS is/are downlink SCS(s), and the other one or two is/are uplink SCS(s)). For example, the first SCS is a downlink SCS (of an SCS-specific carrier) (i.e. a value range of the first SCS is an SCS configured in the downlink SCS-specific carrier list scs-SpecificCarrierList (of FrequencyInfoDL-SIB or DownlinkConfigCommonSIB or FrequencyInfoDL or DownlinkConfigCommon), and the second SCS is an uplink SCS (of an SCS-specific carrier) (i.e. a value range of the first SCS is an SCS configured in the downlink SCS-specific carrier list scs-SpecificCarrierList (of FrequencyInfoDL-SIB or UplinkConfigCommonSIB or FrequencyInfoUL or UplinkConfigCommon).

How the first indication information and/or the second indication information indicate(s) the frequency domain location of the first sub-band based on at least one SCS and/or at least one reference point shall be described below.

In some embodiments, the at least one SCS includes a predefined SCS and/or an indicated SCS, wherein the predefined SCS includes, for example, an SCS other than the SCS indicated by the third indication information in the third SCS, and the indicated SCS includes, for example, the first SCS and/or the second SCS indicated by the first indication information and/or the second indication information, and the SCS indicated by the third indication information; however, it is not limited thereto.

In some embodiments, the at least one reference point includes a predefined reference point and/or an indicated reference point, wherein the predefined reference point includes, for example, a location in the following third reference point other than a reference point indicated by fourth indication information, and the indicated reference point includes, for example, the first reference point and/or the second reference point indicated by the first indication information and/or the second indication information, and the reference point indicated by the fourth indication information; however, it is not limited thereto.

It should be noted that the identical or different SCSs in this disclosure refer to that identical SCSs include that sizes are identical, and different SCSs include that sizes are different and/or determination/acquisition methods are different and/or being indicated by different information.

In some embodiments, when the first indication information and/or the second indication information indicate(s) multiple first sub-bands, the first indication information and/or the second indication information indicate(s) frequency domain locations of different first sub-bands based on identical or different SCSs. For example, a start and/or end and/or center and/or bandwidth of a first sub-band 1 is/are indicated based on a frequency domain resource unit using SCS=60 kHz, and a start and/or end and/or center and/or bandwidth of a first sub-band 2 is/are indicated based on a frequency domain resource unit using SCS=120 kHz. For another example, starts and/or ends and/or centers and/or bandwidths of first sub-band 1 and second sub-band 2 are indicated based on a frequency domain resource unit using SCS=60 kHz, wherein first sub-band 1 and first sub-band 2 correspond to identical or different SCS-specific carriers. Different SCS-specific carriers refer to SCS-specific carriers for different SCS configurations or SCSs, and/or SCS-specific carriers for different (DL and UL) directions.

In some embodiments, for a first sub-band, the first indication information and/or the second indication information indicate(s) a start and/or bandwidth and/or end and/or center of the same first sub-band based on identical or different SCSs. For example, for the same first sub-band, a start and/or end and/or center of the first sub-band is/are indicated based on SCS=120 kHz, and a bandwidth thereof is indicated based on a frequency domain resource unit using SCS=60 kHz.

60kHz and 120kHz in the previous example may be a predefined SCS or the first SCS or the second SCS or the SCS indicated by the third indication information.

In some embodiments, the first indication information and/or the second indication information indicate(s) the location of the first sub-band based on an SCS identical to and/or different from the SCS used by the frequency domain resource unit included in the first sub-band. For example, for a downlink SCS-specific carrier of SCS=15 kHz, a corresponding first sub-band includes one or more RBs using SCS=15 kHz. The first indication and/or second indication information indicate(s) the frequency domain location of the first sub-band based on SCS=15 kHz, such as indicating an offset and a bandwidth between a start and a reference point represented by the number of RBs using SCS=15 kHz. For another example, for the SCS-specific carrier, a corresponding first sub-band includes one or more RBs using SCS=30 kHz, and the first indication information and/or second indication information indicate(s) a location of the first sub-band based on SCS=15 kHz and SCS=30 kHz, such as indicating an offset between a start and a reference point represented by the number of RBs using SCS=15 kHz and a bandwidth represented by the number of RBs using SCS=30 kHz.

The 15kHz and 30kHz in the previous example may be a predefined SCS or the first SCS or the second SCS or the SCS indicated by the third indication information. For example, if they are indicated by the first SCS, the first SCS in the first configuration needs to be indicated as an SCS identical to and/or different from the SCS used by the frequency domain resource unit included in the first sub-band.

In some embodiments, the first configuration in the first indication information and/or the second indication information configures frequency domain locations of different first sub-bands in the group of first sub-bands based on identical or different SCSs. For example, the first configuration includes information for indicating the first SCS and the second SCS, and indicates frequency domain locations of two first subbands respectively based on the first SCS and the second SCS. For another example, the first configuration includes information for indicating the first SCS, and indicates frequency domain locations of all first sub-bands in the group of first sub-bands based on the first SCS. For a further example, the first configuration includes information for indicating the first SCS, indicates a frequency domain location of a sub-band in the group of first sub-bands based on the first SCS, and indicate a frequency domain location of another sub-band in the group of first sub-bands based on the predefined SCS, wherein the first SCS is identical to or different from the predefined SCS.

In some embodiments, the first configuration configures frequency domain locations of different first sub-bands in the group of first sub-bands based on identical or different reference points. For example, the first configuration includes information for indicating the first reference point and the second reference point, and indicates frequency domain locations of two first sub-bands respectively based on the first reference point and the second reference point. For another example, the first configuration includes information for indicating the first reference point, and indicates frequency domain locations of all first sub-bands in the group of first sub-bands based on the first reference point. For a further example, the first configuration includes information for indicating a first reference point, indicates a frequency domain location of a sub-band in the group of first sub-bands based on the first reference point, and indicates a frequency domain location of another sub-band in the group of first subbands based on a predefined reference point, wherein the first reference point is identical to or different from the predefined reference point.

In some embodiments, the method may further include: the terminal equipment determines the frequency domain location of the first sub-band according to the first indication information and/or the second indication information. How to determine the frequency domain location of the first sub-band according to the first indication information and/or the second indication information shall be described below by way of examples. Following names of information elements are illustrative only, and the embodiments of this disclosure are not limited thereto.

### Example 1

When the UE is configured with/indicated a first configuration and/or a second configuration (e.g. *SubbandsPerSCS)* for a (downlink or uplink) carrier configured as *µ* for an SCS (i.e. carrier with *µ*) (for example, the first indication information and/or the second indication information is/are represented by an information element "SubbandsPerSCS-List"), the UE is provided with one uplink subcarrier (such as a first subcarrier) (and one or two downlink sub-bands) on the (downlink or uplink) carrier (with) *µ*. The uplink sub-band is defined by a starting CRB and a size of the number of CRBs. In the first configuration and/or the second configuration *(SubbandsPerSCS),* higher layer parameters *startCRB(r-19)* and *nrofCRBs(r-19)* respectively provide ${SB}_{ul}^{start , μ}$ and ${SB}_{ul}^{size , μ}$ *(SubbandsPerSCS,* for example, further includes a higher layer parameter to indicate the SCS configuration *µ* ). The terminal equipment determines a starting $CRB \left({RB}_{sb _ ul}^{start , μ}\right)$ index and an ending CRB index **(** ${RB}_{sb_ul}^{end , μ}$) of the uplink sub-band according to formulae (1) and (2) below: ${RB}_{sb _ ul}^{start , μ} = {N}_{grid , x}^{start , μ} + {SB}_{ul}^{start , μ}$ formula (1), ${RB}_{sb _ ul}^{end , μ} = {RB}_{sb _ ul}^{start , μ} + {SB}_{ul}^{size , μ} - 1$ formula (2).

The starting location ${SB}_{ul}^{start , μ}$ and the number ${SB}_{ul}^{size , μ}$ (or, in other words, ${RB}_{sb _ ul}^{start , μ}$ and ${RB}_{sb_ul}^{end , μ}$) of resource blocks need to satisfy the following conditions respectively: ${N}_{grid , x}^{start , μ} \leq {RB}_{sb _ ul}^{start , μ} < {N}_{grid , x}^{start , μ} + {N}_{grid , x}^{size , μ} ,$ ${N}_{grid , x}^{start , μ} < {RB}_{sb_ul}^{start , μ} + {SB}_{ul}^{size , μ} \leq {N}_{grid , x}^{start , μ} + {N}_{grid , x}^{size , μ} ;$ where, x is set to be DL or UL. In the absence of ambiguity and confusion (such as when it has been designated that a carrier must be one of DL and UL), the subscript x may be removed. ${N}_{grid , x}^{start , μ}$ denotes the index of the starting CRB of the carrier, and ${N}_{grid , x}^{size , μ}$ denotes the number of RBs/CRBs included in the carrier.

When the UE is not configured with *SubbandsPerSCS* for *µ*, the (downlink and/or uplink) carrier with an SCS configuration of *µ* does not have an uplink sub-band.

### Example 2

When the UE is configured with/indicated a first configuration and/or a second configuration (e.g. *SubbandsPerSCS)* for a pair of a downlink carrier with an SCS configuration of *µ_{DL}* and an uplink carrier with an SCS configuration of *µ_{UL}* (e.g. the first indication information and/or the second indication information is/are denoted by information element "SubbandsPerSCS-List"), the UE is provided with one uplink sub-band (first sub-band) (and one or two downlink sub-bands) on the downlink carrier with *µ_{DL}.* The uplink sub-band is defined by a starting CRB and a size of the number of CRBs. In the first configuration and/or the second configuration *(SubbandsPerSCS),* higher layer parameters *startCRB(r-19)* and *nrofCRBs(r-19)* respectively provide ${SB}_{ul}^{start , {μ}_{DL}}$ and ${SB}_{ul}^{size , {μ}_{DL}}$ (*SubbandsPerSCS,* for example, further includes a higher layer parameter for indicating SCS configuration *µ_{DL}* and/or SCS configuration *µ_{UL}* and/or the downlink carrier and/or the uplink carrier). The terminal equipment determines a starting CRB index ( ${RB}_{sb_ul}^{start , {μ}_{DL}}$) and an ending CRB index ( ${RB}_{sb _ ul}^{end , {μ}_{DL}}$) of the uplink sub-band according to formulae (3) and (4) below: ${RB}_{sb _ ul}^{start , {μ}_{DL}} = {N}_{grid , DL}^{start , {μ}_{DL}} + {SB}_{ul}^{start , {μ}_{DL}}$ formula (3), ${RB}_{sb _ ul}^{end , {μ}_{DL}} = {RB}_{sb _ ul}^{start , {μ}_{DL}} + {SB}_{ul}^{size , {μ}_{DL}} - 1$ formula (4).

The starting location ${SB}_{ul}^{start , {μ}_{DL}}$ and the number ${SB}_{ul}^{size , {μ}_{DL}}$ (or, in other words, ${RB}_{sb_ul}^{start , {μ}_{DL}}$ and ${RB}_{sb _ ul}^{end , {μ}_{DL}}$) of resource blocks need to satisfy the following conditions respectively: ${N}_{grid , DL}^{start , {μ}_{DL}} \leq {SB}_{ul}^{start , {μ}_{DL}} < {N}_{grid , DL}^{start , {μ}_{DL}} + {N}_{grid , DL}^{size , {μ}_{DL}} ,$ ${N}_{grid , DL}^{start , {μ}_{DL}} < {RB}_{sb_ul}^{start , {μ}_{DL}} + {SB}_{ul}^{size , {μ}_{DL}} \leq {N}_{grid , DL}^{start , {μ}_{DL}} + {N}_{grid , DL}^{size , {μ}_{DL}} ;$ where, ${N}_{grid , DL}^{start , {μ}_{DL}}$ denotes an index of the starting CRB of the DL carrier, and ${N}_{grid , DL}^{size , {μ}_{DL}}$ denotes the number of RBs/CRBs included in the DL carrier.

The terminal equipment expects that a starting (frequency location) of the resource block RB ${RB}_{sb_ul}^{start , {μ}_{DL}}$ is not lower than a starting (frequency location) of the RB ${N}_{grid , UL}^{start , {μ}_{UL}}$ (i.e. a starting RB) of the uplink carrier with the SCS configuration of and the uplink carrier with the SCS configuration of *µ_{UL}* is paired with (corresponds to) a downlink carrier with the SCS configuration of *µ_{DL}.*

The terminal equipment expects that an ending (frequency location) of the resource block RB ${RB}_{sb _ ul}^{end , {μ}_{DL}}$ is not higher than an ending (frequency location) of the RB ${N}_{grid , DL}^{start , {μ}_{DL}} + {N}_{grid , DL}^{size , {μ}_{DL}} - 1$ (i.e. an ending RB) of the uplink carrier with the SCS configuration of *µ_{UL},* and the uplink carrier with the SCS configuration of *µ_{UL}* is paired with (corresponds to) a downlink carrier with the SCS configuration of *µ_{DL}.*

When the UE is not configured with *SubbandsPerSCS* for *µ_{DL},* the downlink carrier with the SCS configuration of *µ_{DL}* does not have an uplink sub-band.

### Example 3

When the UE is configured with/indicated a first configuration and/or a second configuration (e.g. *SubbandsPerSCS)* for the downlink carrier with the SCS configuration of *µ_{DL}* (e.g. the first indication information and/or the second indication information is/are denoted by an information element "SubbandsPerSCS-List"), the UE is provided with one uplink sub-band (first sub-band) (and one or two downlink subbands) on the downlink carrier with *µ_{DL}* (the uplink sub-band is within a range of the uplink carrier with the SCS configuration of *µ_{UL}*) (and one uplink sub-band on the uplink carrier with the SCS configuration of *µ_{UL},* the uplink carrier with the SCS configuration of *µ_{UL}* being paired with (corresponding to) the downlink carrier with the SCS configuration of *µ_{DL}*).

The uplink sub-band is defined by the starting CRB and the number of CRBs. In the first configuration and/or the second configuration *(SubbandsPerSCS),* higher layer parameters *startCRB(r-19)* and *nrofCRBs(r-19)* respectively provide ${SB}_{ul}^{start , {μ}_{DL}}$ and ${SB}_{ul}^{size , {μ}_{DL}}$. The terminal equipment determines a starting CRB index ( ${RB}_{sb_ul}^{start , {μ}_{DL}}$) and an ending CRB index ( ${RB}_{sb _ ul}^{end , {μ}_{DL}}$) of the uplink sub-band according to formulae (5) and (6) below: ${RB}_{sb _ ul}^{start , {μ}_{DL}} = {N}_{grid , DL}^{start , {μ}_{DL}} + {SB}_{ul}^{start , {μ}_{DL}}$ formula (5), ${RB}_{sb _ ul}^{end , {μ}_{DL}} = {RB}_{sb _ ul}^{start , {μ}_{DL}} + {SB}_{ul}^{size , {μ}_{DL}} - 1$ formula (6).

The starting location ${SB}_{ul}^{start , {μ}_{DL}}$ and the number ${SB}_{ul}^{size , {μ}_{DL}}$ (or, in other words, ${RB}_{sb_ul}^{start , {μ}_{DL}}$ and ${RB}_{sb _ ul}^{end , {μ}_{DL}}$) of resource blocks need to satisfy the following conditions respectively: ${N}_{grid , DL}^{start , {μ}_{DL}} \leq {SB}_{ul}^{start , {μ}_{DL}} < {N}_{grid , DL}^{start , {μ}_{DL}} + {N}_{grid , DL}^{size , {μ}_{DL}} ,$ ${N}_{grid , DL}^{start , {μ}_{DL}} < {RB}_{sb_ul}^{start , {μ}_{DL}} + {SB}_{ul}^{size , {μ}_{DL}} \leq {N}_{grid , DL}^{start , {μ}_{DL}} + {N}_{grid , DL}^{size , {μ}_{DL}} ;$ where, ${N}_{grid , DL}^{start , {μ}_{DL}}$ denotes an index of the starting CRB of the DL carrier, and ${N}_{grid , DL}^{size , {μ}_{DL}}$ denotes the number of RBs/CRBs included in the DL carrier.

The terminal equipment expects that a starting (frequency location) of the resource block RB ${RB}_{sb_ul}^{start , {μ}_{DL}}$ is not lower than a starting frequency location) of the RB ${N}_{grid , UL}^{start , {μ}_{UL}}$ (i.e. a starting RB) of the uplink carrier with the SCS configuration of and the uplink carrier with the SCS configuration of *µ_{UL}* is paired with (corresponds to) a downlink carrier with the SCS configuration of *µ_{DL}.*

The terminal equipment expects that an ending (frequency location) of the resource block RB ${RB}_{sb _ ul}^{end , {μ}_{DL}}$ is not higher than an ending (frequency location) of the RB ${N}_{grid , DL}^{start , {μ}_{DL}} + {N}_{grid , DL}^{size , {μ}_{DL}} - 1$ (i.e. an ending RB) of the uplink carrier with the SCS configuration of *µ_{UL},* and the uplink carrier with the SCS configuration of *µ_{UL}* is paired with (corresponds to) a downlink carrier with the SCS configuration of *µ_{DL}.*

When the UE is not configured with *SubbandsPerSCS* for *µ_{DL},* the downlink carrier with the SCS configuration of *µ_{DL}* does not have an uplink sub-band.

### Example 4

When the UE is configured with/indicated a first configuration and/or a second configuration (e.g. *SubbandsPerSCS)* for the uplink carrier with the SCS configuration of *µ_{UL}* (e.g. the first indication information and/or the second indication information is/are denoted by an information element "SubbandsPerSCS-List"), the UE is provided with one uplink sub-band (and one uplink sub-band and one or two downlink sub-bands on a downlink carrier configured as *µ_{DL},* the uplink carrier with the SCS configuration of *µ_{DL}* being paired with (corresponding to) the downlink carrier with the SCS configuration of *µ_{UL}*) on the uplink carrier with *µ_{UL}.*

For the uplink carrier with *µ_{UL},* the uplink sub-band is defined by the starting CRB and the number of CRBs. In the first configuration and/or the second configuration *(SubbandsPerSCS),* higher layer parameters *startCRB(r-19)* and *nrofCRBs(r-19)* respectively provide ${SB}_{ul}^{start , {μ}_{UL}}$ and ${SB}_{ul}^{size , {μ}_{UL}}$. The terminal equipment determines a starting CRB index ( ${RB}_{sb_ul}^{start , {μ}_{UL}}$) and an ending CRB index ( ${RB}_{sb _ ul}^{end , {μ}_{DL}}$) of the uplink sub-band according to formulae (7) and (8) below: ${RB}_{sb _ ul}^{start , {μ}_{UL}} = {N}_{grid , UL}^{start , {μ}_{UL}} + {SB}_{ul}^{start , {μ}_{UL}}$ formula (7), ${RB}_{sb _ ul}^{end , {μ}_{UL}} = {RB}_{sb _ ul}^{start , {μ}_{UL}} + {SB}_{ul}^{size , {μ}_{UL}} - 1$ formula (8).

The starting location ${SB}_{ul}^{start , {μ}_{UL}}$ and the number ${SB}_{ul}^{size , {μ}_{UL}}$ (or, in other words, ${RB}_{sb_ul}^{start , {μ}_{UL}}$ and ${RB}_{sb _ ul}^{end , {μ}_{DL}}$) of resource blocks need to satisfy the following conditions respectively: ${N}_{grid , UL}^{start , {μ}_{UL}} \leq {RB}_{sb_ul}^{start , {μ}_{UL}} < {N}_{grid , UL}^{start , {μ}_{UL}} + {N}_{grid , UL}^{size , {μ}_{UL}} ,$ ${N}_{grid , UL}^{start , {μ}_{UL}} < {RB}_{sb_ul}^{start , {μ}_{UL}} + {SB}_{ul}^{size , {μ}_{UL}} \leq {N}_{grid , UL}^{start , {μ}_{UL}} + {N}_{grid , UL}^{size , {μ}_{UL}} ;$ where, ${N}_{grid , UL}^{start , {μ}_{UL}}$ denotes an index of the starting CRB of the UL carrier, and ${N}_{grid , UL}^{size , {μ}_{UL}}$ denotes the number of RBs/CRBs included in the UL carrier.

The terminal equipment expects that a starting (frequency location) of the resource block RB ${RB}_{sb_ul}^{start , {μ}_{UL}}$ is not lower than a starting (frequency location) of the RB ${N}_{grid , DL}^{start , {μ}_{DL}}$ (i.e. a starting RB) of the downlink carrier with the SCS configuration of and the downlink carrier with the SCS configuration of *µ_{DL}* is paired with (corresponds to) an uplink carrier with the SCS configuration of *µ_{UL}.*

The terminal equipment expects that (an ending (frequency location) of) the resource block RB ${RB}_{sb _ ul}^{end , {μ}_{UL}}$ is not higher than (an ending (frequency location)) of the RB ${N}_{grid , DL}^{start , {μ}_{DL}} + {N}_{grid , DL}^{size , {μ}_{DL}} - 1$ (i.e. an ending RB) of the downlink carrier with the SCS configuration of *µ_{DL},* and the uplink carrier with the SCS configuration of *µ_{UL}* is paired with (corresponds to) a downlink carrier with the SCS configuration of *µ_{DL}.*

### Example 5

When the UE is configured with/indicated a first configuration and/or a second configuration (e.g. *SubbandsPerSCS)* for the downlink carrier with the SCS configuration of *µ_{DL}* (e.g. the first indication information and/or the second indication information is/are denoted by an information element "SubbandsPerSCS-List"), the UE is provided with one uplink sub-band and one or two downlink sub-bands on the downlink carrier with *µ_{DL}.*

The uplink sub-band is defined by a reference SCS *µ_{ref}*, the starting CRB ${SB}_{ul}^{start , {μ}_{ref}}$ and a size ${SB}_{ul}^{size , {μ}_{ref}}$ of the number of CRBs. In the first configuration and/or the second configuration *(SubbandsPerSCS),* higher layer parameters *startCRB(r-19), nrofCRBs(r-19)* and *refSubcarrierSpacing(r-19)* (such as corresponding to the first or second SCS) respectively provide ${SB}_{ul}^{start , {μ}_{ref}} , {SB}_{ul}^{size , {μ}_{ref}}$ and SCS*µ_{ref}.* The terminal equipment determines a starting CRB index ( ${RB}_{sb_ul}^{start , {μ}_{ref}}$) and an ending CRB index ( ${RB}_{sb _ ul}^{end , {μ}_{ref}}$) of the uplink sub-band according to formulae (9) and (10) below: ${RB}_{sb _ ul}^{start , {μ}_{ref}} = {N}_{grid , DL}^{start , {μ}_{ref}} + {SB}_{ul}^{start , {μ}_{ref}}$ formula (9), ${RB}_{sb _ ul}^{end , {μ}_{ref}} = {RB}_{sb _ ul}^{start , {μ}_{ref}} + {SB}_{ul}^{size , {μ}_{ref}} - 1$ formula (10).

The starting location ${RB}_{sb_ul}^{start , {μ}_{ref}}$, the ending location ${RB}_{sb _ ul}^{end , {μ}_{re}}$ and the number ${SB}_{sb _ ul}^{size , {μ}_{ref}}$ of resource blocks need to satisfy the following conditions respectively: ${N}_{grid , DL}^{start , {μ}_{DL}} \leq {RB}_{sb_ul}^{start , {μ}_{ref}} \times {2}^{{μ}_{ref} / {μ}_{DL}} < {N}_{grid , DL}^{start , {μ}_{DL}} + {N}_{grid , DL}^{size , {μ}_{DL}} ,$ ${N}_{grid , DL}^{start , {μ}_{DL}} \leq {RB}_{sb_ul}^{end , {μ}_{ref}} \times {2}^{{μ}_{ref} / {μ}_{DL}} < {N}_{grid , DL}^{start , {μ}_{DL}} + {N}_{grid , DL}^{size , {μ}_{DL}} ,$ ${N}_{grid , DL}^{start , {μ}_{DL}} < \left({RB}_{sb _ ul}^{start , {μ}_{ref}}+{SB}_{ul}^{size , {μ}_{ref}}\right) \times {2}^{{μ}_{ref} / {μ}_{DL}} \leq {N}_{grid , DL}^{start , {μ}_{DL}} + {N}_{grid , DL}^{size , {μ}_{DL}} ;$ where, ${N}_{grid , DL}^{start , {μ}_{DL}}$ denotes an index of the starting CRB of the DL carrier, and ${N}_{grid , DL}^{size , {μ}_{DL}}$ denotes the number of RBs/CRBs included in the DL carrier,

The reference SCS *µ_{ref}* is greater than or equal to an SCS configuration for any (configured) UL BWP;
or, the reference SCS *µ_{ref}* is greater than or equal to a maximum SCS for all (configured) UL BWPs;
or, the reference SCS *µ_{ref}* is greater than or equal to a maximum SCS in all configured SCSs in UL *SCS-SpecificCarrierList* in *ServingCellConfigCommon* or *ServingCellConfigCommonSIB*;
or, the reference SCS *µ_{ref}* is equal to an SCS in all configured SCSs in UL *SCS-SpecificCarrierList* in *ServingCellConfigCommon* or *ServingCellConfigCommonSIB.*

The uplink carrier with the reference SCS *µ_{ref}* is paired with (corresponds to) the downlink carrier with the SCS configuration of *µ_{DL}.*

The starting location ${RB}_{sb_ul}^{start , {μ}_{ref}}$, the ending location ${RB}_{sb _ ul}^{end , {μ}_{ref}}$ and the number ${SB}_{sb _ ul}^{size , {μ}_{ref}}$ of resource blocks need to satisfy the following conditions respectively: ${N}_{grid , UL}^{start , {μ}_{ref}} \leq {RB}_{sb _ ul}^{start , {μ}_{ref}} < {N}_{grid , UL}^{start , {μ}_{ref}} + {N}_{grid , UL}^{size , {μ}_{ref}} ,$ ${N}_{grid , UL}^{start , {μ}_{ref}} \leq {RB}_{sb _ ul}^{end , {μ}_{ref}} < {N}_{grid , UL}^{start , {μ}_{ref}} + {N}_{grid , UL}^{size , {μ}_{ref}} ,$ ${N}_{grid , UL}^{start , {μ}_{ref}} < {RB}_{sb_ul}^{start , {μ}_{ref}} + {SB}_{ul}^{size , {μ}_{ref}} \leq {N}_{grid , UL}^{start , {μ}_{ref}} + {N}_{grid , UL}^{size , {μ}_{ref}} ;$ where, ${N}_{grid , UL}^{start , {μ}_{ref}}$ and ${N}_{grid , UL}^{size , {μ}_{ref}}$ denote the starting CRB and the number of CRBs of the uplink carrier configured as the reference SCS*µ_{ref}*·

Example 6 (different from Example 5 in that it is assumed that the reference SCS*µ_{ref}* (e.g. corresponding to the third SCS) is not directly indicated by a specific higher layer parameter)

When the UE is configured with/indicated a first configuration and/or a second configuration (e.g. *SubbandsPerSCS)* for the downlink carrier with the SCS configuration of *µ_{DL}* (e.g. the first indication information and/or the second indication information is/are denoted by an information element "SubbandsPerSCS-List"), the UE is provided with one uplink sub-band and one or two downlink sub-bands on the downlink carrier with *µ_{DL}.*

The uplink sub-band is defined by the starting CRB ${SB}_{ul}^{start , {μ}_{ref}}$ and a size ${SB}_{ul}^{size , {μ}_{ref}}$ of the number of CRBs. In the first configuration and/or the second configuration *(SubbandsPerSCS),* higher layer parameters *startCRB(r-19)* and *nrofCRBs(r-19*) respectively provide ${SB}_{ul}^{start , {μ}_{ref}}$ and ${SB}_{ul}^{size , {μ}_{ref}}$. The terminal equipment determines a starting CRB index ( ${RB}_{sb_ul}^{start , {μ}_{ref}}$) and an ending CRB index ( ${RB}_{sb _ ul}^{end , {μ}_{ref}}$) of the uplink sub-band according to formulae (11) and (12) below: ${RB}_{sb _ ul}^{start , {μ}_{ref}} = {N}_{grid , DL}^{start , {μ}_{ref}} + {SB}_{ul}^{start , {μ}_{ref}}$ formula (11), ${RB}_{sb _ ul}^{end , {μ}_{ref}} = {RB}_{sb _ ul}^{start , {μ}_{ref}} + {SB}_{ul}^{size , {μ}_{ref}} - 1$ formula (12).

For example, the starting location ${RB}_{sb_ul}^{start , {μ}_{ref}}$ and the ending location ${RB}_{sb _ ul}^{end , {μ}_{ref}}$ and number ${SB}_{sb _ ul}^{size , {μ}_{ref}}$ of resource blocks need to satisfy the following conditions respectively: ${N}_{grid , DL}^{start , {μ}_{DL}} \leq {RB}_{sb_ul}^{start , {μ}_{ref}} \times {2}^{{μ}_{ref} / {μ}_{DL}} < {N}_{grid , DL}^{start , {μ}_{DL}} + {N}_{grid , DL}^{size , {μ}_{DL}} ,$ ${N}_{grid , DL}^{start , {μ}_{DL}} \leq {RB}_{sb_ul}^{end , {μ}_{ref}} \times {2}^{{μ}_{ref} / {μ}_{DL}} < {N}_{grid , DL}^{start , {μ}_{DL}} + {N}_{grid , DL}^{size , {μ}_{DL}} ,$ ${N}_{grid , DL}^{start , {μ}_{DL}} < \left({RB}_{sb _ ul}^{start , {μ}_{ref}}+{SB}_{ul}^{size , {μ}_{ref}}\right) \times {2}^{{μ}_{ref} / {μ}_{DL}} \leq {N}_{grid , DL}^{start , {μ}_{DL}} + {N}_{grid , DL}^{size , {μ}_{DL}} ;$ where, ${N}_{grid , DL}^{start , {μ}_{DL}}$ denotes an index of the starting CRB of the DL carrier, and ${N}_{grid , DL}^{size , {μ}_{DL}}$ denotes the number of RBs/CRBs included in the DL carrier.

The reference SCS *µ_{ref}* is (equal to) a maximum SCS for any (configured) UL BWP;
or, the reference SCS *µ_{ref}* is (equal to) a maximum SCS in all configured SCSs in UL *SCS-SpecificCarrierList* in *ServingCellConfigCommon* or *ServingCellConfigCommonSIB;*
or, the reference SCS *µ_{ref}* is equal to one SCS in all configured SCSs in UL *SCS-SpecificCarrierList* in *ServingCellConfigCommon* or *ServingCellConfigCommonSIB.*

The uplink carrier with the reference SCS *µ_{ref}* is paired with (corresponds to) the downlink carrier with the SCS configuration of *µ_{DL}.*

For example, the starting location ${RB}_{sb_ul}^{start , {μ}_{ref}}$, the ending location ${RB}_{sb _ ul}^{end , {μ}_{ref}}$ and the number ${SB}_{sb _ ul}^{size , {μ}_{ref}}$ of resource blocks need to satisfy the following conditions respectively: ${N}_{grid , UL}^{start , {μ}_{ref}} \leq {RB}_{sb _ ul}^{start , {μ}_{ref}} < {N}_{grid , UL}^{start , {μ}_{ref}} + {N}_{grid , UL}^{size , {μ}_{ref}} ,$ ${N}_{grid , UL}^{start , {μ}_{ref}} \leq {RB}_{sb _ ul}^{end , {μ}_{ref}} < {N}_{grid , UL}^{start , {μ}_{ref}} + {N}_{grid , UL}^{size , {μ}_{ref}} ,$ ${N}_{grid , UL}^{start , {μ}_{ref}} < {RB}_{sb_ul}^{start , {μ}_{ref}} + {SB}_{ul}^{size , {μ}_{ref}} \leq {N}_{grid , UL}^{start , {μ}_{ref}} + {N}_{grid , UL}^{size , {μ}_{ref}} ;$ for example, ${N}_{grid , UL}^{start , {μ}_{ref}}$ and ${N}_{grid , UL}^{size , {μ}_{ref}}$ denote the starting CRB and the number of CRBs of the uplink carrier configured as the reference SCS*µ_{ref}.*

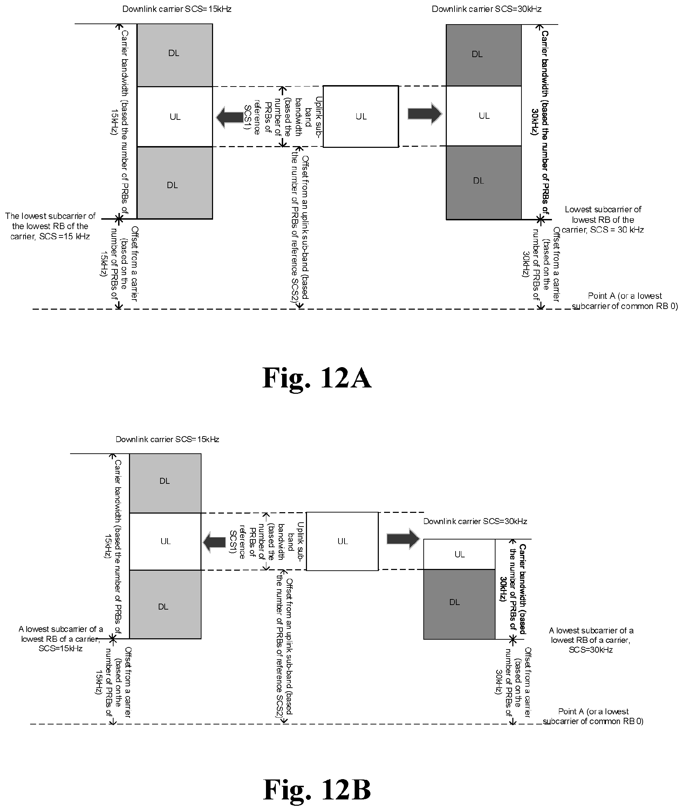

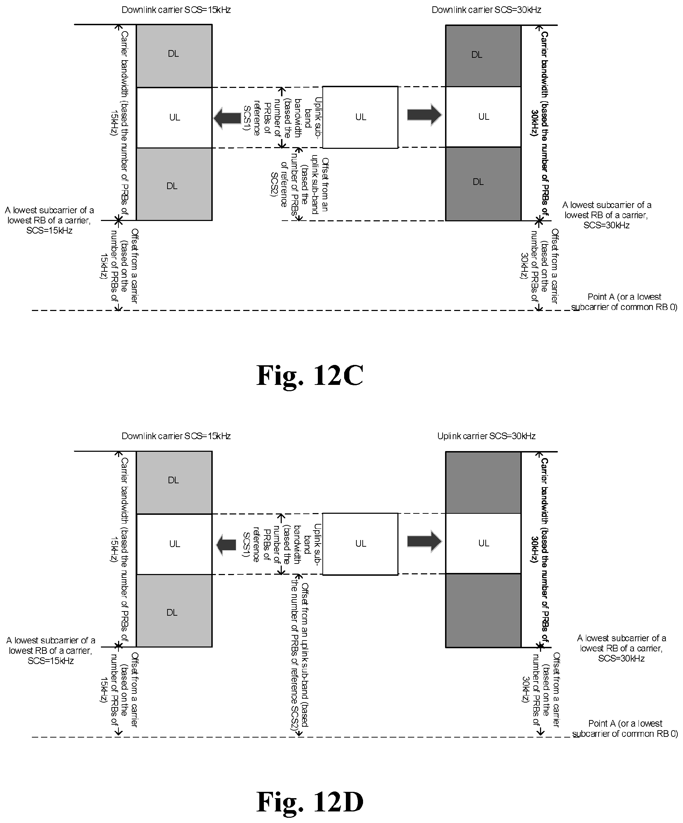

### Example 7 (corresponding to FIGs. 12A, 12B and 12D)

When the UE is configured with/indicated a first configuration and/or a second configuration (e.g. *SubbandsPerSCS),* the UE is provided with one uplink sub-band (such as corresponding to the first sub-band) (and one or two downlink sub-bands).

The uplink sub-band is defined by the starting CRB ${SB}_{ul}^{start , {μ}_{ref}}$ and a size ${SB}_{ul}^{size , {μ}_{ref}}$ of the number of CRBs. In the first configuration and/or the second configuration *(SubbandsPerSCS),* higher layer parameters *startCRB(r-19)* (based on Point A) and *nrofCRBs(r-19*) respectively provide ${SB}_{ul}^{start , {μ}_{ref}}$ and ${SB}_{ul}^{size , {μ}_{ref}}$. The terminal equipment determines a starting CRB index ( ${RB}_{sb_ul}^{start , {μ}_{ref}}$) and/or an ending CRB index ( ${RB}_{sb _ ul}^{end , {μ}_{ref}}$) of the uplink sub-band according to formulae (11) and (12) below: ${RB}_{sb _ ul}^{start , {μ}_{ref}} = {SB}_{ul}^{start , {μ}_{ref}}$ formula (11), ${RB}_{sb _ ul}^{end , {μ}_{ref}} = {RB}_{sb _ ul}^{start , {μ}_{ref}} + {SB}_{ul}^{size , {μ}_{ref}} - 1$ formula (12).

The reference SCS is, for example, as described in Example 5 or Example 6.

The starting location ${RB}_{sb_ul}^{start , {μ}_{ref}}$ and the ending location ${RB}_{sb _ ul}^{end , {μ}_{re}}$ and number ${SB}_{sb _ ul}^{size , {μ}_{ref}}$ of resource blocks need to satisfy the following conditions respectively: ${N}_{grid , DL}^{start , {μ}_{DL}} \leq {RB}_{sb_ul}^{start , {μ}_{ref}} \times {2}^{{μ}_{ref} / {μ}_{DL}} < {N}_{grid , DL}^{start , {μ}_{DL}} + {N}_{grid , DL}^{size , {μ}_{DL}} ,$ ${N}_{grid , DL}^{start , {μ}_{DL}} \leq {RB}_{sb_ul}^{end , {μ}_{ref}} \times {2}^{{μ}_{ref} / {μ}_{DL}} < {N}_{grid , DL}^{start , {μ}_{DL}} + {N}_{grid , DL}^{size , {μ}_{DL}} ,$ ${N}_{grid , DL}^{start , {μ}_{DL}} < \left({RB}_{sb _ ul}^{start , {μ}_{ref}}+{SB}_{ul}^{size , {μ}_{ref}}\right) \times {2}^{{μ}_{ref} / {μ}_{DL}} \leq {N}_{grid , DL}^{start , {μ}_{DL}} + {N}_{grid , DL}^{size , {μ}_{DL}} ;$ where, ${N}_{grid , DL}^{start , {μ}_{DL}}$ denotes an index of the starting CRB of the DL carrier, and ${N}_{grid , DL}^{size , {μ}_{DL}}$ denotes the number of RBs/CRBs included in the DL carrier.

The starting location ${RB}_{sb_ul}^{start , {μ}_{ref}}$, the ending location ${RB}_{sb _ ul}^{end , {μ}_{ref}}$ and the number ${SB}_{sb _ ul}^{size , {μ}_{ref}}$ of resource blocks need to satisfy the following conditions respectively: ${N}_{grid , UL}^{start , {μ}_{ref}} \leq {RB}_{sb _ ul}^{start , {μ}_{ref}} < {N}_{grid , UL}^{start , {μ}_{ref}} + {N}_{grid , UL}^{size , {μ}_{ref}} ,$ ${N}_{grid , UL}^{start , {μ}_{ref}} \leq {RB}_{sb _ ul}^{end , {μ}_{ref}} < {N}_{grid , UL}^{start , {μ}_{ref}} + {N}_{grid , UL}^{size , {μ}_{ref}} ,$ ${N}_{grid , UL}^{start , {μ}_{ref}} < {RB}_{sb_ul}^{start , {μ}_{ref}} + {SB}_{ul}^{size , {μ}_{ref}} \leq {N}_{grid , UL}^{start , {μ}_{ref}} + {N}_{grid , UL}^{size , {μ}_{ref}} ;$ where, ${N}_{grid , UL}^{start , {μ}_{ref}}$ and ${N}_{grid , UL}^{size , {μ}_{ref}}$ denote the starting CRB and the number of CRBs of the uplink carrier configured as the reference SCS*µ_{ref}*.

The second sub-band is determined according to the first sub-band:
Assuming that the starting CRB index of the first sub-band is ${RB}_{sb_ul}^{start , {μ}_{ref}}$ and/or the ending CRB index thereof is ${RB}_{sb _ ul}^{end , {μ}_{ref}}$:
for a (downlink and/or uplink) carrier with an SCS configuration of *µ*₂, the terminal equipment determines a starting CRB index ( ${RB}_{sb _ ul}^{start , {μ}_{2}}$) and/or an ending CRB index ( ${RB}_{sb _ ul}^{end , {μ}_{2}}$) of the uplink sub-band according to formulae (13) and (14) below: ${RB}_{sb _ ul}^{start , {μ}_{2}} = {RB}_{sb _ ul}^{start , {μ}_{ref}} \times {2}^{{μ}_{ref} / {μ}_{2}} or \left⌊{RB}_{sb _ ul}^{start , {μ}_{ref}}\times {2}^{{μ}_{ref} / {μ}_{2}}\right⌋$ or $\left⌈{RB}_{sb _ ul}^{start , {μ}_{ref}}\times {2}^{{μ}_{ref} / {μ}_{2}}\right⌉$ formula(13), ${RB}_{sb _ ul}^{end , {μ}_{2}} = {RB}_{sb _ ul}^{end , {μ}_{ref}} \times {2}^{{μ}_{ref} / {μ}_{2}} or \left⌊{RB}_{sb _ ul}^{end , {μ}_{ref}}\times {2}^{{μ}_{ref} / {μ}_{2}}\right⌋$ or $\left⌈{RB}_{sb _ ul}^{end , {μ}_{ref}}\times {2}^{{μ}_{ref} / {μ}_{2}}\right⌉$ formula (14).

In some embodiments, the second indication information includes one or more second configurations, wherein information included in the second configuration is identical to or not completely identical to that included in the first configuration. Reference may be made to the explanations the first configuration for contents of the information included in the second configuration. The second configuration is, for example, a second information field or second information element different from the first information field or first information element (in names and/or messages and IEs where they are present).

In some embodiments, the method may further include: the terminal equipment determines a frequency domain location of the second sub-band according to the frequency domain location of the first sub-band indicated by the first indication information and/or the second indication information, wherein the second sub-band may be determined based on the first sub-band, or indirectly determined or implicitly indicated according to the first indication information and/or the second indication information.

The second sub-band and the first sub-band may have identical or different starting locations and/or widths and/or ending locations. For example, the first sub-band and the second sub-band may be aligned in the frequency domain, or they may not be aligned. The alignment includes that the starting locations and/or widths (or bandwidths, expressed in frequency units, such as Hz, kHz, MHz, GHz, etc.) and/or ending locations of the first sub-band and the second sub-band are identical.

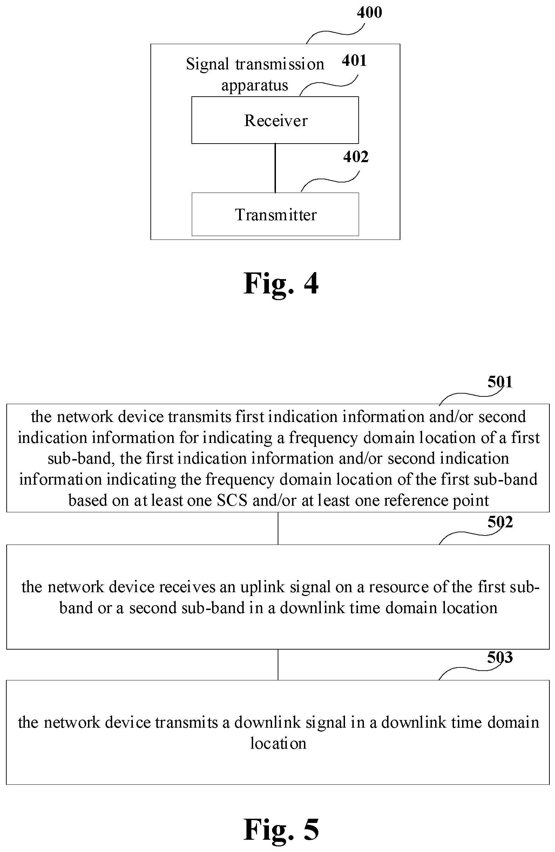

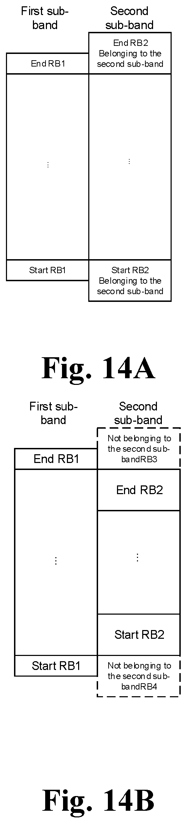

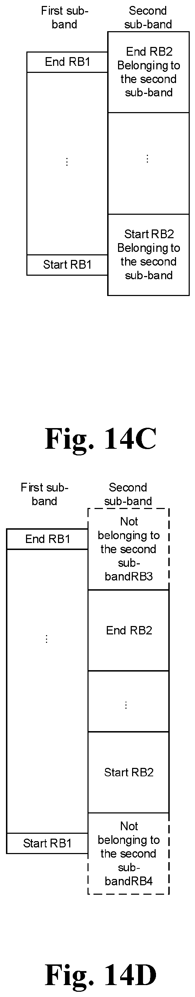

In some embodiments, the second sub-band and (the frequency domain resource units included in) the first sub-band use identical or different SCS or are for identical or different SCSs and/or SCS-specific carriers and/or BWPs. For example, when SCS 0 of (the first frequency domain resource unit) the first sub-band is smaller than SCS 1 of (the second frequency domain resource unit) the second sub-band, the UE does not expect that (starts or ends of) a first and/or last first frequency domain resource unit (using SCS 0) of the first sub-band and a first and/or last second frequency domain resource unit (using SCS 1) of the second sub-band are not aligned/have different frequency locations, or, in other words, the UE expects that (starts or ends of) a first and/or last first frequency domain resource unit of the first sub-band and a first and/or last second frequency domain resource unit of the second sub-band are aligned/have identical frequency locations. For another example, when an SCS of (a frequency domain resource unit of) the first sub-band is smaller than the second sub-band (that is, a bandwidth/size of the first frequency domain resource unit is smaller than that of the second frequency domain resource unit), if the start and/or end of the first and/or last first frequency domain resource unit of the first sub-band is/are within a second frequency domain resource unit of an SCS using (the frequency domain resource unit of) the second sub-band, the second frequency domain resource unit belongs to or does not belong to the second sub-band. As shown in FIGs. 14A-14D, taking that the first frequency domain resource unit is RB1 and the second frequency domain resource unit is RB2 as an example, in FIGs. 14A and 14C, the starting RB2 and ending RB2 of the second sub-band belong to the second sub-band, but the starting RB1 of the first sub-band is within the starting RB2 and the ending RB1 is within the ending RB2. As shown in FIGs. 14B and 4D, the starting RB1 of the first sub-band is within RB3 and the ending RB2 is within RB4, but RB3 and RB4 do not belong to the second sub-band.

Determining the first sub-band and/or the second sub-band shall be described below with reference to the accompanying drawings.

Example 1: a UL sub-band is indicated based on/for a downlink SCS (taking that downlink of a cell supports 2 SCS-specific carriers or 2 SCSs as an example, for example, the SCSs are 15kHz and 30kHz respectively); in this example, the first sub-band is indicated for a downlink carrier by taking that each SCS or SCS-specific carrier is configured with at most one uplink sub-band as an example.

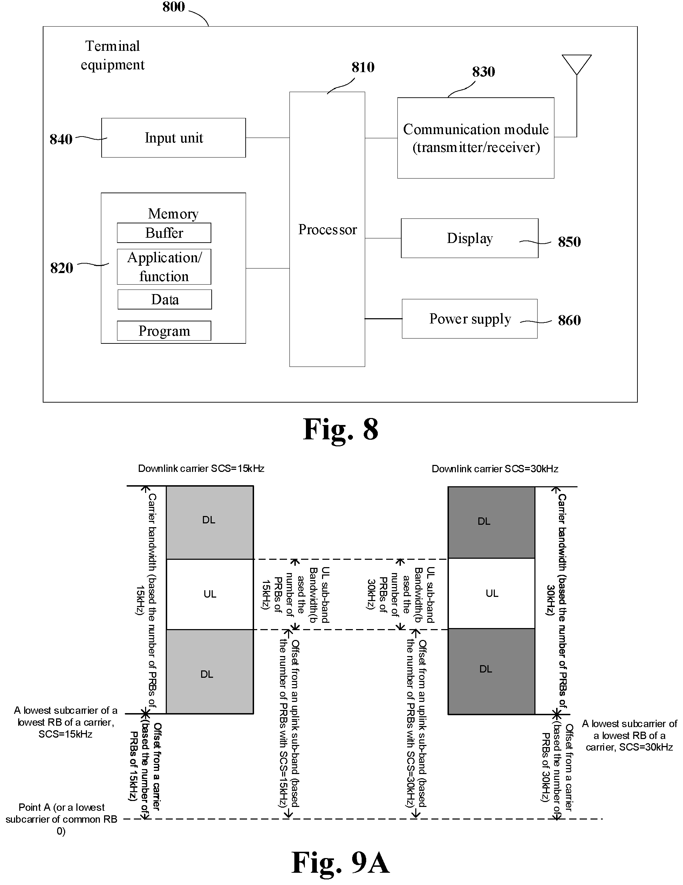

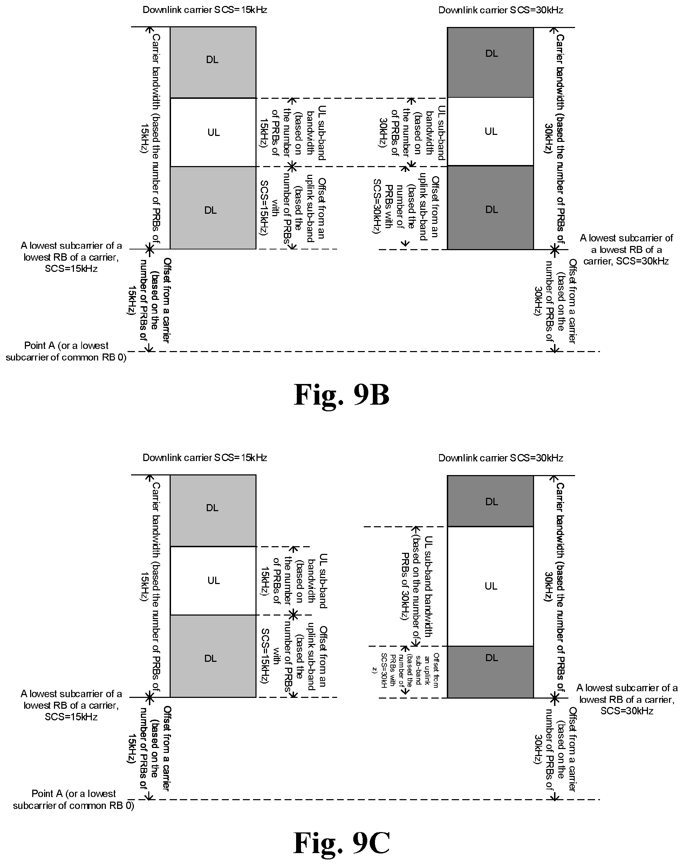

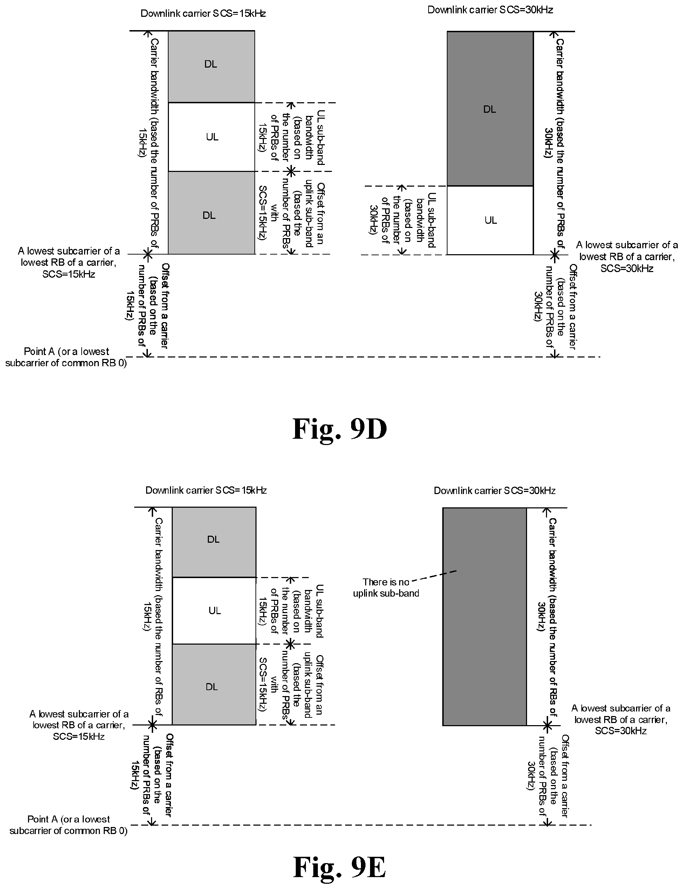

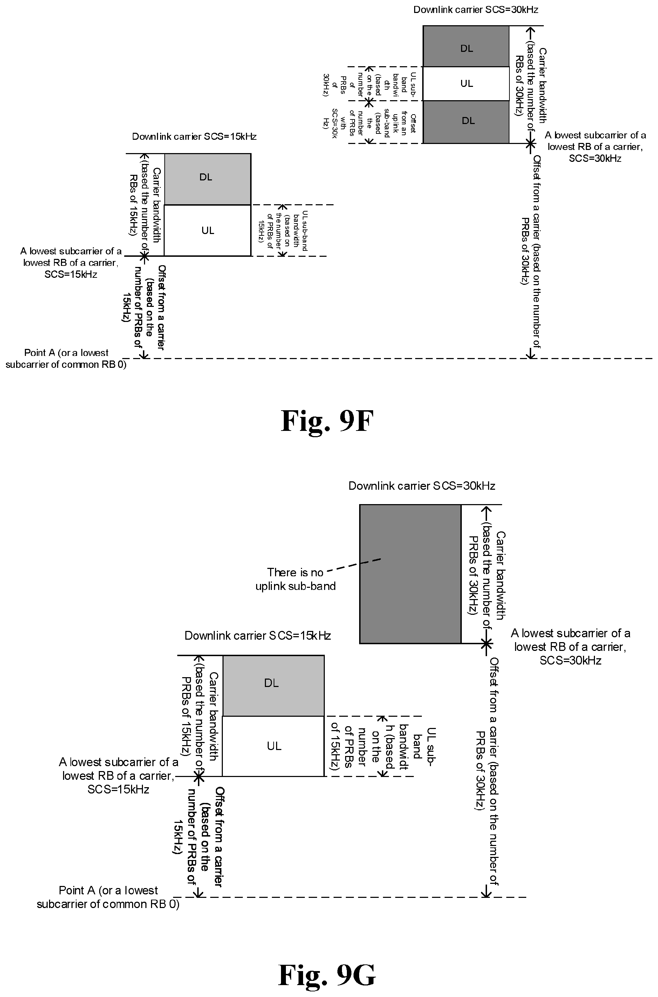

Example 1-1: UL sub-bands are indicated for each (DL) SCS-specific carrier/SCS, taking indicating the UL sub-bands based on corresponding SCSs (of SCS-specific carriers) as an example. As shown in FIG. 9A, for a downlink SCS-specific carrier with an SCS of 15kHz and a downlink SCS-specific carrier with an SCS of 30kHz, UL subbands thereon are respectively indicated. Starts of the UL sub-bands are indicated by taking Point A as a reference point, and the UL sub-bands on the two specific carriers are aligned in the frequency domain. As shown in FIG. 9B, a difference from FIG. 9A is that starts of the UL subcarriers are indicated by taking a start of a downlink specific carrier as a reference point. As shown in FIGs. 9C, 9D and 9F, a difference from FIG. 9B is that the UL sub-bands on the two specific carriers are not aligned in the frequency domain. As shown in FIG. 9E and FIG. 9G, there is no uplink sub-band on the downlink SCS-specific carrier with an SCS of 30kHz (that is, an uplink sub-band is configured only on a part (including only one) of the SCSs or SCS-specific carriers).

Example 1-2: a UL sub-band (first sub-band) is indicated for some SCS-specific carriers/SCSs, and UL sub-bands of other SCS-specific carriers are determined accordingly. In this example, the UL sub-bands of other SCS-specific carriers may also be regarded as the second sub-bands, or in other words, the UL sub-bands of other SCS-specific carriers may also be regarded as the first sub-bands, and this part of first subbands are indirectly determined/indicated according to the first indication information and/or the second indication information.

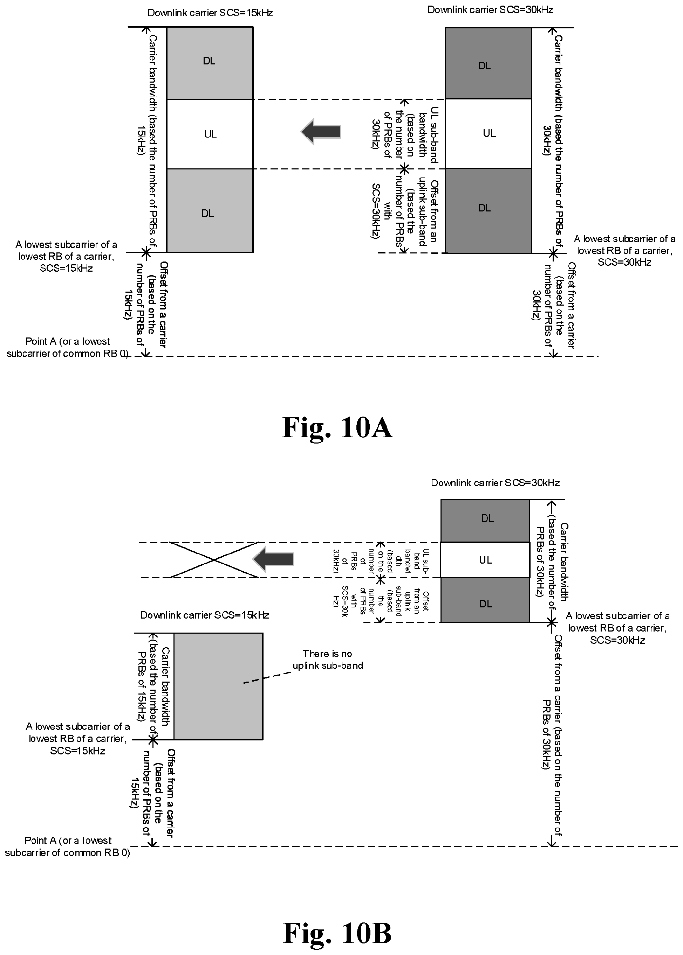

Taking indicating UL sub-bands based on corresponding SCSs (of SCS-specific carriers) as an example, as shown in FIG. 10A, a UL sub-band on an SCS-specific carrier with an SCS of 30kHz is indicated (a starting location relative to a starting location of the SCS-specific carrier is indicated), and the UL sub-band on the SCS-specific carrier with an SCS of 15kHz is aligned with the UL sub-band on the SCS-specific carrier with an SCS of 30kHz. Therefore, a frequency domain location of the UL sub-band on the SCS-specific carrier with an SCS of 15kHz may be indirectly determined. As shown in FIG. 10B, a difference from FIG. 10A is that an uplink sub-band configured for the SCS-specific carrier with an SCS of 15kHz and an uplink sub-band configured for the SCS-specific carrier with an SCS of 30kHz do not overlap at all in the frequency domain. Hence, based on the indicated UL sub-band, it is determined that there is no uplink sub-band on the SCS-specific carrier with an SCS of 15kHz. It should be noted that if the uplink sub-band configured for the SCS-specific carrier with an SCS of 15kHz partially overlaps with the uplink sub-band configured for the SCS-specific carrier with an SCS of 30kHz in the frequency domain, the SCS-specific carrier with an SCS of 15kHz includes or does not include an uplink sub-band (for a case of including an uplink sub-band, the uplink sub-band only includes resources that overlap with the uplink sub-band configured for the SCS-specific carrier with an SCS of 30kHz).

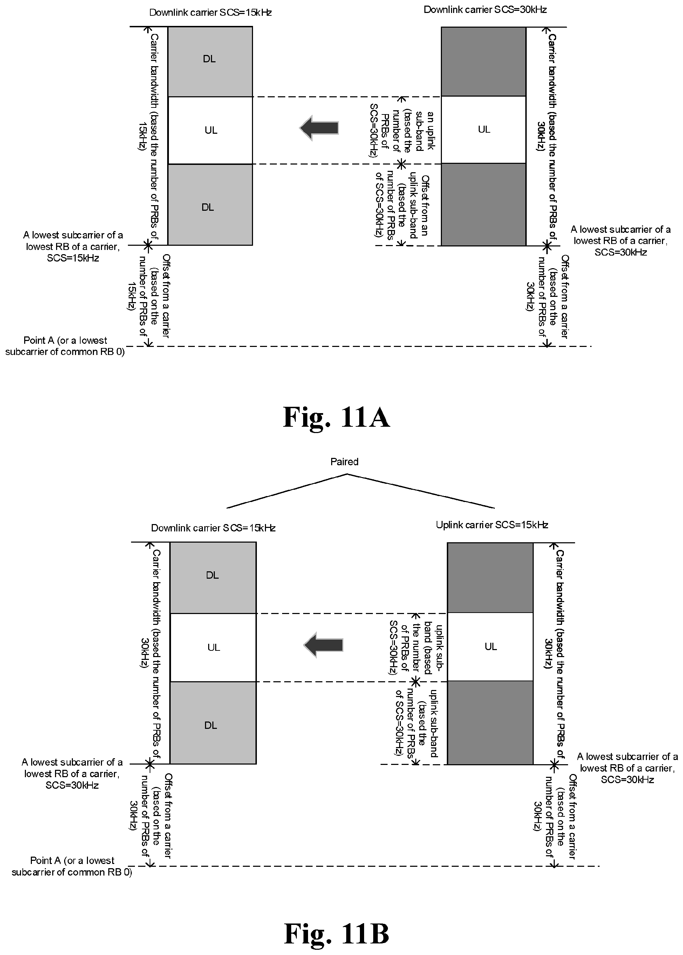

Example 2: a UL sub-band is indicated based on/for an uplink SCS (or a UL sub-band is indicated for a UL SCS-specific carrier), and a UL sub-band of a DL SCS-specific carrier is determined accordingly (or a first sub-band of an SCS-specific carrier is indirectly indicated), or the UL sub-band of the DL SCS-specific carrier may also be regarded as a second sub-band (one DL SCS-specific carrier and one UL SCS-specific carrier shall be taken as examples below). As shown in FIG. 11A, a difference from FIG. 10A is that the indicated SCS-specific carrier with an SCS of 30kHz is an uplink carrier, and is not a downlink carrier. As shown in FIG. 11B, the uplink carrier is paired with (corresponding to) the downlink carrier, and an uplink sub-band on a downlink carrier corresponding to the uplink subcarrier is determined based on an uplink sub-band indicated on the uplink carrier.

Example 3: a reference UL sub-band (first sub-band) is indicated and a UL sub-band of a DL and/or UL SCS-specific carrier is determined accordingly (or, in other words, a UL sub-band on a DL and/or UL SCS-specific carrier is not directly indicated for it, but a UL sub-band of a DL and/or UL SCS-specific carrier is indirectly indicated). The UL sub-band of the DL and/or UL SCS-specific carrier may also be regarded as a second sub-band or an indirectly indicated first sub-band. SCS1 and SCS2 are identical or different, wherein being identical includes that sizes are identical, and being different includes that sizes are different and/or methods of determination/acquisition are different and/or that they are indicated by different information. SCS1 and SCS2 are related to downlink and/or uplink SCS(s), and SCS1 and SCS2 may be predefined and/or may be indicated.

As shown in FIG. 12A, FIG. 12B and FIG. 12D, a bandwidth of a reference first sub-band is indicated based on SCS1, a start of the reference first sub-band is indicated based on SCS2 (by taking Point A as a reference point; however, it is not limited thereto), as shown in FIG. 12C, a bandwidth of the reference first sub-band is indicated based on SCS1, and a start of the reference first sub-band is indicated based on SCS2 (by taking the start of the SCS-specific carrier as a reference point; however, it is not limited thereto)). As shown in FIGs. 12A and 12C, the frequency domain locations of the uplink sub-bands on the downlink SCS-specific carrier with an SCS of 30kHz and the downlink SCS-specific carrier with an SCS of 15kHz are aligned with a frequency domain location of the reference uplink sub-band. As shown in FIG. 12D, the frequency domain locations of the uplink sub-bands on the downlink SCS-specific carrier with an SCS of 15kHz and the uplink SCS-specific carrier with an SCS of 30kHz are aligned with the frequency domain location of the reference uplink sub-band. As shown in FIG. 12B, the frequency domain location of the uplink sub-band on the downlink SCS-specific carrier with an SCS of 15kHz is aligned with the frequency domain location of the reference uplink sub-band. An overlapped part in the frequency domain of the downlink SCS-specific carrier with an SCS of 30kHz and the reference uplink sub-band is taken as the uplink sub-band on the downlink SCS-specific carrier with an SCS of 30kHz.

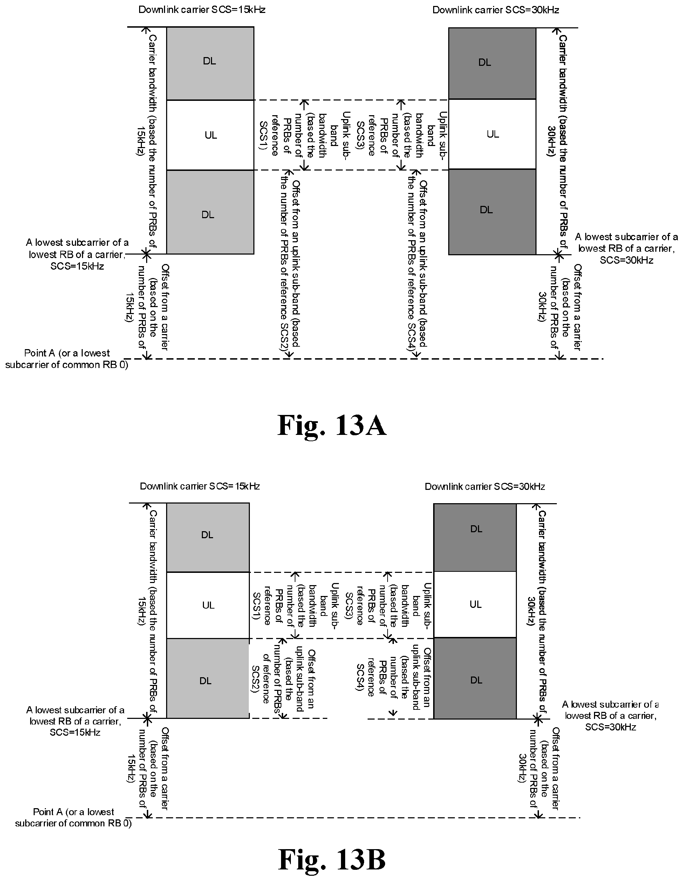

Example 4: a UL sub-band (first sub-band) is indicated based on an SCS different from a corresponding SCS (of a (downlink and/or uplink) SCS-specific carrier) (being different includes that sizes are different and/or methods of determination/acquisition are different and/or that they are indicated by different information). A DL carrier is taken as an example in FIG. 13A and FIG. 13B, and implementations of the UL carrier thereof are similar. In addition, SCSs 1-4 are identical or different, wherein being identical includes that sizes are identical, and being different includes that sizes are different and/or methods of determination/acquisition are different and/or that they are indicated by different information. SCS1 and SCS2 may be predefined and/or may be indicated. SCSs 1-4 are related to downlink and/or uplink SCSs. As shown in FIG. 13A, a bandwidth of a first sub-band on the SCS-specific carrier with an SCS of 15kHz is indicated based on SCS1, a start of the first sub-band on the SCS-specific carrier with an SCS of 15kHz is indicated based on SCS2 (by taking Point A as a reference point; however, it is not limited thereto), a bandwidth of the first sub-band on the SCS-specific carrier with an SCS of 30kHz is indicated based on SCS3, and a start of the first sub-band on the SCS-specific carrier with an SCS of 30kHz is indicated based on SCS4 (by taking Point A as a reference point; however, it is not limited thereto). As shown in FIG. 13B, a difference from FIG. 13A is that the start of the first sub-band is based on the start of the downlink SCS-specific carrier as a reference point.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, the network device may be supported in performing SBFD operations, and indicating the frequency domain location of the sub-band by the network device to the terminal equipment may be supported simultaneously, thereby improving flexibility of resource allocation and resource utilization.

### Embodiments of a second aspect

The embodiments of this disclosure provide a signal transmission apparatus. The apparatus may be, for example, a terminal equipment, or one or some components or assemblies configured in the terminal equipment, with contents identical to those in the embodiments of the first aspect being not going to be described herein any further.

FIG. 4 is a schematic diagram of the signal transmission apparatus of the embodiments of this disclosure. As a principle of the signal transmission apparatus is identical to that of the method in the embodiments of the first aspect, reference may be made to the embodiments of the first aspect for implementation of the apparatus, with identical parts being not going to be described herein any further.

As shown in FIG. 4, the signal transmission apparatus 400 of the embodiments of this disclosure includes:
a receiver 401 configured to receive first indication information and/or second indication information for indicating a frequency domain location of a first sub-band, the first indication information and/or second indication information indicating the frequency domain location of the first sub-band based on at least one subcarrier spacing (SCS) and/or at least one reference point; and
a transmitter 402 configured to transmit an uplink signal on a resource of the first sub-band or a second sub-band in a downlink time domain location.

Reference may be made to 301-302 in the first aspect for implementations of the receiver 401 and the transmitter 402, and repeated parts shall not be described herein any further.

Furthermore, for the sake of simplicity, connection relationships between the components or modules or signal profiles thereof are only illustrated in FIG. 4. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

### Embodiments of a third aspect

The embodiments of this disclosure provide a signal reception method, which shall be described from a network device side, with contents identical to those in the embodiments of the first aspect being not going to be described herein any further.

FIG. 5 is a schematic diagram of the signal reception method of the embodiments of this disclosure. As shown in FIG. 5, the method includes:
501: the network device transmits first indication information and/or second indication information for indicating a frequency domain location of a first sub-band, the first indication information and/or second indication information indicating the frequency domain location of the first sub-band based on at least one subcarrier spacing (SCS) and/or at least one reference point; and
502: the network device receives an uplink signal on a resource of the first sub-band or a second sub-band in a downlink time domain location.

Reference may be made to 301-302 in the first aspect for implementations of 501-502, and repeated parts shall not be described herein any further.

In some embodiments, the method may further include:
503: the network device transmits a downlink signal in a downlink time domain location.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

### Embodiments of a fourth aspect

The embodiments of this disclosure provide a signal reception apparatus. The apparatus may be, for example, a network device, or one or some components or assemblies configured in the network device, with contents identical to those in the embodiments of the third aspect being not going to be described herein any further.

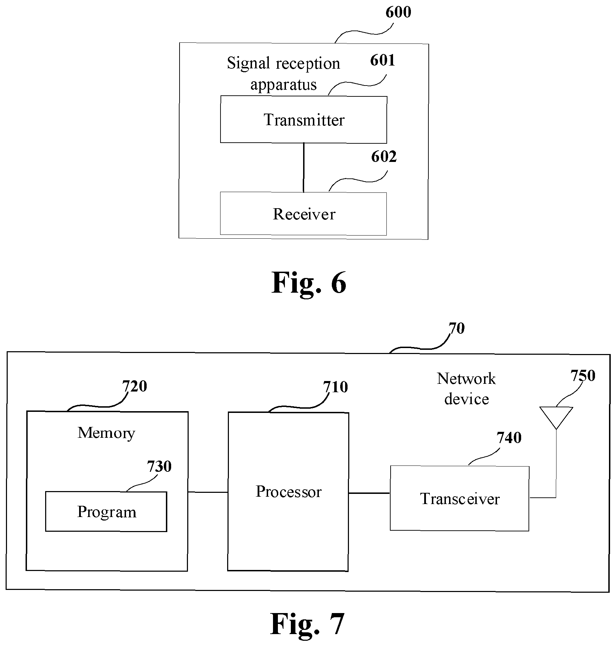

FIG. 6 is a schematic diagram of the signal reception apparatus of the embodiments of this disclosure. As a principle of the signal reception apparatus is identical to that of the method in the embodiments of the third aspect, reference may be made to the embodiments of the third aspect for implementation of the apparatus, with identical parts being not going to be described herein any further.

As shown in FIG. 6, the signal reception apparatus 600 of the embodiments of this disclosure includes:
a transmitter 601 configured to transmit first indication information and/or second indication information for indicating a frequency domain location of a first sub-band, the first indication information and/or second indication information indicating the frequency domain location of the first sub-band based on at least one subcarrier spacing (SCS) and/or at least one reference point; and
a receiver 602 configured to receive an uplink signal on a resource of the first sub-band or a second sub-band in a downlink time domain location.

Optionally, the transmitter 601 is further configured to transmit a downlink signal in the downlink time domain location.

Reference may be made to the embodiments of the first aspect for implementations of the above features, which shall not be described herein any further.

It should be noted that the components or modules related to this disclosure are only described above. However, this disclosure is not limited thereto, and the signal reception apparatus 600 of the embodiments of this disclosure may further include other components or modules, and reference may be made to related techniques for particulars of these components or modules.

Furthermore, for the sake of simplicity, connection relationships between the components or modules or signal profiles thereof are only illustrated in FIG. 6. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

### Embodiments of a fifth aspect

The embodiments of this disclosure provide a communication system, and reference may be made to FIG. 1, with contents identical to those in the embodiments of the first to the fourth aspects being not going to be described herein any further.

In some embodiment, the communication system 100 may at least include a network device 101 and a terminal equipment 102, the network device 101 including the signal reception apparatus 600 as described in the embodiments of the fourth aspect, and the terminal equipment 102 including the signal transmission apparatus 400 as described in the embodiments of the second aspect, which shall not going to be described herein any further.

The embodiments of this disclosure further provide a network device, which may be, for example, a base station. However, this disclosure is not limited thereto, and it may also be another network device.

FIG. 7 is a schematic diagram of a structure of the network device of the embodiments of this disclosure. As shown in FIG. 7, the network device 700 may include a processor 710 (such as a central processing unit (CPU)) and a memory 720, the memory 720 being coupled to the processor 710. Wherein, the memory 720 may store various data, and furthermore, it may store a program 730 for information processing, and execute the program 730 under control of the processor 710.

For example, the processor 710 may be configured to execute a program to carry out the method described in the embodiments of the third aspect.

Furthermore, as shown in FIG. 7, the network device 700 may include a transceiver 740, and an antenna 750, etc., wherein functions of the above components are similar to those in the related art, and shall not be described herein any further. It should be noted that the network device 700 does not necessarily include all the parts shown in FIG. 7, and furthermore, the network device 700 may include parts not shown in FIG. 7, and the related art may be referred to.

The embodiments of this disclosure further provide a terminal equipment; however, this disclosure is not limited thereto, and it may also be another equipment.

FIG. 8 is a schematic diagram of the terminal equipment of the embodiments of this disclosure. As shown in FIG. 8, the terminal equipment 800 may include a processor 810 and a memory 820, the memory 820 storing data and a program and being coupled to the processor 810. It should be noted that this figure is illustrative only, and other types of structures may also be used, so as to supplement or replace this structure and achieve a telecommunications function or other functions.

For example, the processor 810 may be configured to execute a program to carry out the method described in the embodiments of the first aspect.

As shown in FIG. 8, the terminal equipment 800 may further include a communication module 830, an input unit 840, a display 850, and a power supply 860, wherein functions of the above components are similar to those in the prior art, which shall not be described herein any further. It should be noted that the terminal equipment 800 does not necessarily include all the parts shown in FIG. 8, and the above components are not necessary. Furthermore, the terminal equipment 800 may include parts not shown in FIG. 8, and the prior art may be referred to.

Embodiments of this disclosure provide a computer readable program, which, when executed in a signal reception apparatus or a network device, will cause a computer to carry out the method as described in the embodiments of the third aspect in the signal reception apparatus or the network device.

Embodiments of this disclosure provide a storage medium, including a computer readable program, which will cause a computer to carry out the method as described in the embodiments of the third aspect in a signal reception apparatus or a network device.

Embodiments of this disclosure provide a computer readable program, which, when executed in a signal transmission apparatus or a terminal equipment, will cause a computer to carry out the method as described in the embodiments of the first aspect in the signal transmission apparatus or the terminal equipment.

Embodiments of this disclosure provide a storage medium, including a computer readable program, which will cause a computer to carry out the method as described in the embodiments of the first aspect in a signal transmission apparatus or a terminal equipment.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

## Claims

1. A signal transmission apparatus, applicable to a terminal equipment, comprising:
a receiver configured to receive first indication information and/or second indication information for indicating a frequency domain location of a first sub-band, the first indication information and/or second indication information indicating a frequency domain location of the first sub-band based on at least one subcarrier spacing (SCS) and/or at least one reference point; and
a transmitter configured to transmit an uplink signal on a resource of the first sub-band or a second sub-band in a downlink time domain location.

2. The apparatus according to claim 1, wherein the downlink time domain location comprises a time domain resource unit that is predefined and/or indicated as being downlink, and/or, the downlink time domain location is a full duplex time domain resource unit, and/or, a frequency domain resource to which the downlink time domain location corresponds comprises a frequency domain resource for receiving a downlink signal.

3. The apparatus according to claim 1, wherein the first indication information is cell-specific and the second indication information is UE-specific, or both the first indication information and the second indication information are cell-specific or UE-specific.

4. The apparatus according to claim 1, wherein the first indication information and/or second indication information is/are carried by radio resource control (RRC) signaling and/or media access control (MAC) signaling and/or physical layer (PHY) signaling.

5. The apparatus according to claim 1, wherein the first indication information and/or the second indication information indicate(s) one or more first sub-bands.

6. The apparatus according to claim 5, wherein the first indication information and the second indication information comprise information for indicating frequency domain locations of identical first sub-bands, and/or information for indicating frequency domain locations of different first sub-bands.

7. The apparatus according to claim 1, wherein the at least one SCS comprises a predefined SCS and/or an indicated SCS, and the at least one reference point comprises a predefined reference point and/or an indicated reference point.

8. The apparatus according to claim 1, wherein the first indication information and/or second indication information comprise(s) one or more first configurations, the first configuration comprising information for indicating one or more of following:
(a) frequency domain location(s) of one or one group of first sub-bands;
a first index;
a second index;
a third index;
a first SCS;
a second SCS;
a first reference point; or
a second reference point.

9. The apparatus according to claim 8, wherein the first configuration configures a frequency domain location of a first sub-band based on the first SCS and/or the second SCS and/or a third SCS and/or the first reference point and/or the second reference point and/or a third reference point.

10. The apparatus according to claim 9, wherein the third SCS comprises one or more of following:
an SCS indicated by third indication information;
an SCS for time division duplex (TDD) uplink and downlink configuration;
an SCS of a carrier;
a specific SCS in SCSs of carriers;
an SCS of a downlink carrier;
an SCS of an uplink carrier;
a first specific SCS in SCSs of downlink carriers;
a second specific SCS in SCSs of uplink carriers;
a specific SCS in a first specific SCS in SCSs of downlink carriers and a second specific SCS in SCSs of uplink carriers;
a specific SCS in SCSs of downlink carriers and a second specific SCS in SCSs of uplink carriers;
a specific SCS in a first specific SCS in SCSs of downlink carriers and SCSs of uplink carriers;
a specific SCS in SCSs of downlink carriers and SCSs of uplink carriers;
an SCS of a downlink first specific carrier;
an SCS of an uplink second specific carrier;
a specific SCS in an SCS of a downlink first specific carrier and an SCS of an uplink second specific carrier;
a specific SCS in an SCS of a downlink carrier and an SCS of an uplink second specific carrier;
a specific SCS in an SCS of a downlink first specific carrier and an SCS of an uplink carrier;
an SCS of downlink and uplink third specific carriers;
an SCS of a bandwidth part (BWP);
a specific SCS in SCSs of a BWP;
an SCS of a downlink BWP;
an SCS of an uplink BWP;
a first specific SCS in SCSs of a downlink BWP;
a second specific SCS in SCSs of an uplink BWP;
a specific SCS in a first specific SCS in SCSs of a downlink BWP and a second specific SCS in SCSs of an uplink BWP;
a specific SCS in SCSs of a downlink BWP and a second specific SCS in SCSs of an uplink BWP;
a specific SCS in a first specific SCS in SCSs of a downlink BWP and SCSs of an uplink BWP;
a specific SCS in SCSs of a downlink BWP and SCSs of an uplink BWP;
an SCS of a downlink first specific BWP;
an SCS of an uplink second specific BWP;
a specific SCS in SCSs of a downlink first specific BWP and SCSs of an uplink second specific BWP;
a specific SCS in SCSs of a downlink BWP and SCSs of an uplink second specific BWP;
a specific SCS in SCSs of a downlink first specific BWP and SCSs of an uplink BWP;
an SCS of downlink and uplink third specific BWPs; or
an SCS pre-defined for a frequency range and/or a frequency band and/or a carrier.

11. The apparatus according to claim 9, wherein the third reference point comprises one or more of following:
a reference point indicated by fourth indication information;
point A;
a specific subcarrier of a specific common RB;
a first location of a carrier;
a specific location in a first location of a carrier;
a second location of a downlink carrier;
a third location of an uplink carrier;
a first specific location in a second location of a downlink carrier;
a second specific location in a third location of an uplink carrier;
a specific location in a first specific location in a second location of a downlink carrier and a second specific location in a third location of an uplink carrier;
a specific location in a second location of a downlink carrier and a second specific location in a third location of an uplink carrier;
a specific location in a second specific location in a second location of a downlink carrier and a third location of an uplink carrier;
a specific location in a second location of a downlink carrier and a third location of an uplink carrier;
a second location of a downlink first specific carrier;
a third location of an uplink second specific carrier;
a specific location in a second location of a downlink first specific carrier and a third location of an uplink second specific carrier;
a specific location in a second location of a downlink carrier and a third location of an uplink second specific carrier;
a specific location in a second location of a downlink first specific carrier and a third location of an uplink carrier;
a first location of downlink and uplink third specific carriers;
a fourth location of a BWP;
a specific location in a fourth location of a BWP;
a fifth location of a downlink BWP;
a sixth location of an uplink BWP;
a first specific location in a fifth location of a downlink BWP;
a second specific location in a sixth location of an uplink BWP;
a specific location in a first specific location in a fifth location of a downlink BWP and a second specific location in a sixth location of an uplink BWP;
a specific location in a fifth location of a downlink BWP and a second specific location of a sixth location of an uplink BWP;
a specific location in a second specific location in a fifth location of a downlink BWP and a sixth location of an uplink BWP;
a specific location in a fifth location of a downlink BWP and a sixth location of an uplink BWP;
a fifth location of a downlink first specific BWP;
a sixth location of an uplink second specific BWP;
a specific location in a fifth location of a downlink first specific BWP and a sixth location of an uplink second specific BWP;
a specific location in a fifth location of a downlink BWP and a sixth location of an uplink second specific BWP;
a specific location in a fifth location of a downlink first specific BWP and a sixth location of an uplink BWP;
a fourth location of downlink and uplink third specific BWPs; or
a pre-defined frequency location.

12. The apparatus according to claim 8, wherein the first index is used to identify the first configuration and/or the one or onegroup of first sub-bands, the second index is used to identify or indicate an SCS-specific carrier with which the first configuration is associated, and the third index is used to identify or indicate a BWP with which the configuration is associated.

13. The apparatus according to claim 8, wherein the first index is used to identify the first configuration and/or the one or one group of first sub-bands, and is used to indicate an SCS-specific carrier and/or a BWP corresponding to the first configuration.

14. The apparatus according to claim 8, wherein the first SCS and/or a second SCS is/are equal to or not less than a third SCS, and/or the first reference point and/or a second reference point is/are within or not within a frequency range of a carrier.

15. The apparatus according to claim 1, wherein the receiver further receives fifth indication information, the fifth indication information being used for releasing a first configuration comprised in the first indication information and/or second indication information.

16. The apparatus according to claim 1, wherein the apparatus further comprises:
a processor configured to determine a frequency domain location of a second sub-band according to a frequency domain location of a first sub-band indicated by the first indication information and/or second indication information.

17. The apparatus according to claim 7, wherein SCS sizes to which the first sub-band and second sub-band correspond are different.

18. A signal reception apparatus, applicable to a network device, comprising:
a transmitter configured to transmit first indication information and/or second indication information for indicating a frequency domain location of a first sub-band, the first indication information and/or second indication information indicating a frequency domain location of the first sub-band based on at least one subcarrier spacing (SCS) and/or at least one reference point; and
a receiver configured to receive an uplink signal on a resource of the first sub-band or a second sub-band in a downlink time domain location.

19. The apparatus according to claim 18, wherein the transmitter is further configured to transmit a downlink signal in the downlink time domain location.

20. A communication system, comprising a terminal equipment and/or a network device,
the terminal equipment comprising the apparatus as claimed in any one of claims 1-17,
and the network device comprising the apparatus as claimed in any one of claims 18-19.
